# EUROPÄISCHE PATENTSCHRIFT

(11) **EP 1 280 721 B1**
(45) Veröffentlichungstag und Bekanntmachung des Hinweises auf die Patenterteilung: **03.03.2004**
(21) Anmeldenummer: 01931524.1
(22) Anmeldetag: 14.03.2001
(51) Int. Cl.: B65G 47/61

(54) **HÄNGEFÖRDEREINRICHTUNG MIT EINER UMSCHLEUSUNGSSTATION**
SUSPENDED CONVEYER DEVICE COMPRISING A RE-ROUTING STATION
CONVOYEUR AERIEN AVEC STATION DE TRANSFERT

(30) Priorität: 15.03.2000 DE 10012524
(43) Veröffentlichungstag der Anmeldung: 05.02.2003
(73) Patentinhaber: WF Logistik GmbH, 86899 Landsberg (DE)
(72) Erfinder: SCHÖNENBERGER, Rolf, 86899 Landsberg/Lech (DE)
(74) Vertreter: Jordan, Volker, Dr.
(86) Internationale Anmeldenummer: PCT/EP2001/002876
(87) Internationale Veröffentlichungsnummer: WO 2001/068482

(56) Entgegenhaltungen:
- DE-A- 19 800 630
- DE-C- 173 050
- DE-C- 922 819
- DE-U- 9 402 990
- US-A- 3 747 538
- US-A- 3 853 068
- US-A- 5 697 301
- PATENT ABSTRACTS OF JAPAN vol. 1998, no. 05, 30. April 1998 (1998-04-30) & JP 10 001903 A (H S S T KAIHATSU KK), 6. Januar 1998 (1998-01-06)

## Beschreibung

Die Erfindung betrifft eine Hängefördereinrichtung gemäß dem Oberbegriff des Anspruchs 1.

Eine derartige Einrichtung ist, z.B., durch US-A-5 697 301 bekannt.

Hängefördereinrichtungen der vorstehend genannten Art finden weit verbreitet beispielsweise in der Bekleidungsindustrie Verwendung und werden dort überwiegend zum Transport von an Kleiderbügeln hängenden Bekleidungsstücken genutzt. Als Fördergutträger dienen dabei sogenannte Bügelträger mit einem Trägerkörper, der an seinem unteren Ende einen Hakenbereich zum Einhängen eines Kleiderbügels hat und an seinem oberen Ende ein Paar zu entgegengesetzten Seiten von dem Trägerkörper abstehender Laufrollen aufweist. Die Bügelträger sind in der Regel mit jeweils einer Laufrolle an einer Laufschiene angehängt, wobei diese Laufrolle im Förderbetrieb in einer Führungsrille der Laufschiene geführt rollen kann. Der Trägerkörper des Bügelträgers erstreckt sich seitlich neben der Laufschiene nach unten hin in einen Förderstrecken-Freiraum. Üblicherweise ist zum Antrieb der Bügelträger ein längs der Laufschiene geführtes Antriebsband oder dergleichen vorgesehen. Im Falle eines Reibband-Antriebs handelt es sich bei dem Antriebsband um ein Reibband, welches beispielsweise als Endlosband um zwei Umlenkstationen umlaufend angetrieben wird und weiches Bügelträger längs der jeweiligen Laufschiene reibschlüssig mitnehmen kann. Hängefördereinrichtungen mit solchen Reibband-Antrieben ermöglichen üblicherweise ein wahlweises Stauen einer Anzahl von Fördergutträgern bei weiterlaufendem Reibband. Eine solche Hängefördereinrichtung mit Reibbandantrieb ist beispielsweise in der EP 0 582 047 B1 beschrieben.

Es sind auch Hängefördereinrichtungen bekannt, bei denen die Bügelträger mittels einer um zwei Umlenkstationen umlaufend angetriebenen und längs betreffender Laufschienen geführten Förderkette zur Bewegung angetrieben werden.

Bei den vorstehend genannten Hängefördereinrichtungen verläuft ein . zusammenhängender Laufschienenstrangabschnitt (eine zusammenhängende Laufschienenstrecke) normalerweise von einer Umlenkstation des betreffenden Antriebsbandes zur nächsten Umlenkstation. Die Übergabe von Bügelträgern von einem Förderstreckenabschnitt zu einem anderen Förderstreckenabschnitt beziehungsweise das Ausschleusen von Bügelträgern aus der jeweiligen Förderstrecke erfolgt bei den bekannten Hängefördereinrichtungen an den Umlenkstationen mittels entsprechender Bügelträger-Übergabevorrichtungen an rotierenden Umlenktrommeln der Umlenkstationen. Zum Stand der Technik wird diesbezüglich erneut auf die EP 0 582 047 B1 verwiesen.

In der deutschen Patentanmeldung 199 43 141 (Anmeldetag 09.09.1999) der Anmelderin ist eine Abzweigstation oder Weiche für eine Hängefördereinrichtung der oben erläuterten Art beschrieben, die das wahlweise Ausschleusenvon Fördergutträgern aus einem Laufschienenstrangabschnitt einer ersten Förderstrecke heraus ermöglicht, um die ausgeschleusten Fördergutträger einer zweiten Förderstrecke zuzuführen. Die Abzweigstation bietet also die Möglichkeit, wahlweise Fördergutträger aus einer ersten Förderstrecke auszuschleusen und einer zweiten Förderstrecke zuzuführen, die Fördergutträger also - anders ausgedrückt - wahlweise von der ersten Förderstrecke auf eine zweite Förderstrecke umzuschleusen oder auf der ersten Förderstrecke zu belassen. Die Abzweigstation ist funktionell nicht an eine Umlenkstation für Antriebsbänder gebunden, sondern auch an einen etwaig gradlinigen Verlauf der ersten Förderstrecke anschließbar. Neben einer Zuführung der Fördergutträger zu der Weiche beziehungsweise Abzweigstation in einer derartigen Förderrichtung, dass die Weiche oder Abzweigstation wahlweise zum Umschleusen einsetzbar ist, zieht die Offenlegungsschrift auch eine Zufuhr der Fördergutträger zur Weiche in dazu entgegengesetzten Förderrichtungen in Erwägung.

Aus der EP 0 926 083 A 1 ist ferner eine Kreuzung für einen Hängeförderer bekannt, die es ermöglicht, dass sich eine erste und eine zweite Förderstrecke kreuzen können. Ein Ausschleusen der Fördergutträger aus der ersten beziehungsweise zweiten Förderstrecke heraus und die Zufuhr der ausgeschleusten Fördergutträger zur anderen Förderstrecke ist bei der bekannten Kreuzung nicht möglich.

Die Erfindung trachtet, eine Möglichkeit der Übergabe von Fördergutträgern zwischen einer ersten Förderstrecke und einer zweiten Förderstrecke zu schaffen, die eine hohe Flexibilität hinsichtlich der Führung von Warenströmen in der Hängefördereinrichtung gibt. Zur Lösung dieser Aufgabe werden die Merkmale gemäß dem Anspruch 1 vorgeschlagen.

Erfindungsgemäß ermöglicht die gegebenenfalls auch als Kreuz-Weiche oder X-Weiche bezeichenbare Umschleusungsstation sowohl ein wahlweises Ausschleusen von Fördergutträgern aus der ersten Förderstrecke und die Zufuhr (das Einschleusen) der Fördergutträger zu der zweiten Förderstrecke (Umschleusen von der ersten Förderstrecke zur zweiten Förderstrecke) als auch das Ausschleusen von Fördergutträgern aus der zweiten Förderstrecke und die Zufuhr (das Einschleusen) der ausgeschleusten Fördergutträger zur ersten Förderstrecke (Umschleusen der Fördergutträger von der zweiten Förderstrecke zur ersten Förderstrecke). Es sind somit folgende Warenströme möglich: Auf der ersten Förderstrecke zugeführte Fördergutträger werden auf die zweite Förderstrecke umgeschleust, auf der ersten Förderstrecke zugeführte Fördergutträger verbleiben auf der ersten Förderstrecke, auf der zweiten Förderstrecke zugeführte Fördergutträger werden auf die erste Förderstrecke umgeschleust, auf der zweiten Förderstrecke zugeführte Fördergutträger verbleiben auf der zweiten Förderstrecke.

Durch entsprechende Verwendung der Umschleusungsstation ist es ferner möglich, einen auf der ersten Förderstrecke unter Einsatz von Fördergutträgern der Umschleusungsstation zugeführten ersten Warenstrom und einen auf der zweiten Förderstrecke unter Einsatz von Fördergutträgern der Umschleusungsstation zugeführten zweiten Warenstrom in der Umschleusungsstation zusammenzuführen und gegebenenfalls zu vermischen, und den resultierenden Warenstrom auf der ersten oder der zweiten Förderstrecke von der Umschleusungsstation abzuführen. Ferner ist es durch entsprechende Verwendung der Umschleusungsstation möglich, Waren, die der Umschleusungsstation unter Einsatz von Fördergutträgern über die erste Förderstrecke oder/und über die zweite Förderstrecke zugeführt werden, auf zwei resultierende Warenströme zu verteilen, indem die zugeführten Waren in der Umschleusungsstation wahlweise der ersten oder der zweiten Förderstrecke für die weitere Förderung zugewiesen und dementsprechend über die erste Förderstrecke oder über die zweite Förderstrecke von der Umschleusungsstation abgeführt werden. Auf diese Weise lassen sich beispielsweise Sortieraufgaben auf einfache Weise lösen.

Die erwähnten Beispiele machen deutlich, dass die erfindungsgemäße Umschleusungsstation vorteilhaft für verschiedenste Zusammenführ-, Vermisch-, Verteil- und Sortieraufgaben in Bezug auf mittels Fördergutträgern transportierbaren Gegenstände beziehungsweise Waren eingesetzt werden kann und dementsprechend durch eine große Flexibilität bei der Handhabung von Fördergutträgern beziehungsweise der von diesen transportierten Gegenständen gibt. In diesem Zusammenhang kann es ferner auch äußerst vorteilhaft sein, dass bei den verschiedenen Anwendungen der Umschteusungsstation zumindest im Regelfall die Fördergutträger ihre Förderrichtung beibehalten können, also eine Förderrichtungsumkehr nicht erforderlich ist.

Es sollte noch erwähnt werden, dass vorliegend von einer ersten Förderstrecke und einer zweiten Förderstrecke gesprochen wird, auf denen jeweils einerseits Fördergutträger der Umschleusungsstation zugeführt werden können und andererseits die zugeführten Fördergutträger von der Umschleusungsstation wieder abgeführt werden können. Es wird also davon ausgegangen, dass die erste und die zweite Förderstrecke durch die Umschleusungsstation hindurchführen, wobei die Umschleusungsstation wahlweise Fördergutträger zwischen der ersten und der zweiten Förderstrecke umschleust. Es ist aber auch ohne Weiteres möglich, von einer ersten, einer zweiten, einer dritten und einer vierten Förderstrecke zu sprechen, von denen zwei Förderstrecken zur Zufuhr von Fördergutträgern zur Umschleusungsstation und die anderen zwei Förderstrecken zur Abfuhr der der Umschleusungsstation zugeführten Fördergutträger von der Umschleusungsstation dienen. Man könnte dann die Umschleusungsstation beispielsweise so charakterisieren, dass diese dafür ausgebildet ist, wahlweise Fördergutträger von einer ersten, in der Umschleusungsstation endenden Förderstrecke auf eine dritte, in der Umschleusungsstation beginnende Förderstrecke oder eine vierte, in der Umschleusungsstation beginnende Förderstrecke umzuschleusen sowie wahlweise Fördergutträger von einer zweiten, in der Umschleusungsstation endenden Förderstrecke auf die dritte oder die vierte Förderstrecke umzuschleusen. Im Folgenden wird allerdings die zuerst benutzte Nomenklatur verwendet, nach der eine erste und eine zweite, jeweils durch die Umschleusungsstation hindurch führende Förderstrecke vorgesehen ist, wobei die Fördergutträger wahlweise zwischen der ersten und der zweiten Förderstrecke umgeschleust beziehungsweise auf der jeweiligen Förderstrecke belassen werden können. Die Zuordnung der zur Umschleusungsstation hinführenden Förderstreckenabschnitte und der von der Umschleusungsstation wegführenden Förderstreckenabschnitte zur ersten beziehungsweise zur zweiten Förderstrecke ist prinzipiell beliebig. Eine sinnvolle Zuordnung lässt sich häufig aus der Ausgestaltung der Hängefördereinrichtung, beispielsweise der Führung eines Antriebsbands oder dergleichen, ableiten.

Den Förderstrecken ist jeweils wenigstens eine Laufschiene zugeordnet, die eine nach oben offene Laufrollen-Führungsrille aufweist zur Führung von mit jeweils einer, bezogen auf die Förderrichtung linken oder rechten Laufrolle an der Laufschiene hängenden, mit dieser Laufrolle in die Führungsrille eingreifenden und sich mit dem Trägerkörper nach unten hin in einen Förderstrecken-Freiraum seitlich neben der Laufschiene erstreckenden Fördergutträgern. Dabei ist von der ersten und der zweiten Förderstrecke eine zumindest bereichsweise (jedenfalls in einem in Förderrichtung vor der Umschleusungsstation liegenden und in einem in Förderrichtung nach der Umschleusungsstation liegenden Streckenbereich) dafür vorgesehen, mit den linken Laufrollen an einer betreffenden Laufschiene hängende Fördergutträger zu führen und die andere zumindest bereichsweise (jedenfalls in einem in Förderrichtung vorder Umschleusungsstation liegenden und in einem in Förderrichtung nach der Umschleusungsstation liegenden Streckenbereich) dafür vorgesehen, mit den rechten Laufrollen an einer betreffenden Laufschiene hängende Fördergutträger zu führen. Erfindungsgemäß ist die Umschleusungsstation (gemäß einer zweckmäßigen Zuordnung der zur Umschleusungsstation hinführenden und der von der Umschleusungsstation wegführenden Förderstreckenabschnitte zur ersten und zur zweiten Förderstrecke) so ausgebildet, dass das Umschleusen zwischen der ersten und der zweiten Förderstrecke einen Wechsel von einem Hängen der Fördergutträger mit den linken Laufrollen an einer betreffenden Laufschiene zu einem Hängen der Fördergutträger mit den rechten Laufrollen an einer betreffenden Laufschiene beziehungsweise einen Wechsel von einem Hängen der Fördergutträger mit den rechten Laufrollen an einer betreffenden Laufschiene zu einem Hängen der Fördergutträger mit den linken Laufrollen an einer betreffenden Laufschiene vorsieht.

Bei der Erfindungsgemäßen Ausbildung der Umschleusungsstation verlaufen die erste Förderstrecke und die zweite Förderstrecke in der Umschleusungsstation über eine diesen Förderstrecken gemeinsame Entscheidungsstrecke oder einen diesen. Förderstrecken gemeinsamen Entscheidungsort, wobei die Fördergutträger beim Passieren der Entscheidungsstrecke beziehungsweise des Entscheidungsorts für die weitere Förderung wahlweise der ersten oder der zweiten Förderstrecke zugewiesen werden können.

In der Umschleusungsstation sind die Fördergutträger im Bereich des Entscheidungsorts beziehungsweise innerhalb der Entscheidungsstrecke in tatsächlichem oder potentiellem Führungseingriff und gegebenenfalls Abstütz- und Laufrollen-Abrolleingriff sowohl mit einer ersten Laufschienenstrecke der ersten Förderstrecke als auch mit einer zweiten Laufschienenstrecke der zweiten Förderstrecke, wobei von der ersten und der zweiten Laufschienenstrecke eine eine linken Laufrollen zugeordnete Laufschienenstrecke und die andere eine rechten Laufrollen zugeordnete Laufschienenstrecke ist.

Wenn hier von Laufschienenstrecke gesprochen wird, so ist damit ein Bereich oder Abschnitt einer Laufschiene oder mehrerer in Förderrichtung aufeinanderfolgender Laufschienen längs der jeweiligen Förderstrecke (gegebenenfalls die gesamte Laufschiene beziehungsweise der von den Laufschienen gebildete Laufschienenstrangabschnitt) gemeint, wobei die jeweilige Laufschiene ein- oder mehrteilig ausgebildet sein, also beispielsweise von einem einteiligen Laufschienenbauteil oder einem Tragprofilbauteil und einem daran gelagerten Laufschienenbauteil gebildet sein kann. Wenn hier von potentiellem Führungseingriff im Gegensatz zu einem tatsächlichen Führungseingriff die Rede ist, so ist hiermit gemeint, dass die beiden Laufschienenstrecken in der Umschleusungsstation gegebenenfalls auch nur die Funktion einer Absturzsicherung oder dergleichen erfüllen können, wenn die Führung der Fördergutträger beispielsweise mittels einer die einzelnen Fördergutträger haltenden Antriebsanordnung erfolgt. In der Regel wird aber ein tatsächlicher Führungseingriff vorgesehen sein, wobei es sich vorzugsweise um einen direkten Eingriff zwischen den Fördergutträgern und den Laufschienenstrecken handelt. Es besteht allerdings auch die Möglichkeit, dass der Führungseingriff unter Vermittlung etwa der schon erwähnten Antriebsanordnung zustande kommt, die beispielsweise in den Laufschienenstrecken geführte langgestreckte Mitnahmeelemente, beispielsweise Mitnahmeketten, aufweist.

Um eine Umschleusung zwischen den Förderstrecken ohne großen mechanischen Aufwand und ohne übermäßige Umschleusungskräfte zu ermöglichen, ist es bevorzugt, dass in der Umschleusungsstation im Bereich des Entscheidungsorts beziehungsweise innerhalb der Entscheidungsstrecke im Falle einer linken Laufrolle zwischen dieser und der zugeordneten Laufschienenstrecke kein wesentlicher oder nur ein gegenüber anderen Laufschienenstrecken reduzierter, seitlich nach rechts wirkender Führungseingriff vorgesehen ist und im Falle einer rechten Laufrolle zwischen dieser und der zugeordneten Laufschienenstrecke kein wesentlicher oder nur ein gegenüber anderen Laufschienenstrecken reduzierter, seitlich nach links wirkender Führungseingriff vorgesehen ist. Nach einer bevorzugten Ausgestaltung wird dies dadurch erreicht, dass ein eine Führungsrille zum Förderstreckenfreiraum hin seitlich begrenzender Schienenabschnitt der ersten Laufschienenstrecke und ein eine Führungsrille zum Förderstrecken-Freiraum hin seitlich begrenzender Schienenabschnitt der zweiten Laufschienenstrecke jeweils im Bereich des Entscheidungsorts beziehungsweise innerhalb der Entscheidungsstrecke eine seitlich nach links und rechts offene Aussparung aufweisen.

Erfindungsgemäß laufen die erste Laufschienenstrecke und die zweite Laufschienenstrecke bogenförmig in Richtung zur Entscheidungsstrecke beziehungsweise zum Entscheidungsort aufeinander zu und weisen im Bereich der Entscheidungsstrecke beziehungsweise des Entscheidungsorts einen einen gemeinsamen Förderstrecken-Freiraum freilassenden Seitenabstand auf. Eine derartige Führung der Förderstrecken ist insbesondere dann zweckmäßig, wenn die erste und die zweite Förderstrecke bereichsweise parallel zueinander verlaufen.

Zum Umschleusen der Fördergutträger zwischen der ersten und der zweiten Förderstrecke kann die Umschleusungsstation wenigstens ein zwischen einer ersten und einer zweiten Führungsstellung verstellbares Fördergutträger-Führungsglied aufweisen, das in der ersten Führungsstellung verstellbares Fördergutträger-Führungsglied aufweist, das in der ersten Führungsstellung auf der ersten Förderstrecke zugeführte Fördergutträger auf dieser belässt und auf der zweiten Förderstrecke zugeführte Fördergutträger auf die erste Förderstrecke umschleust und das in der zweiten Führungsstellung auf der zweiten Förderstrecke zugeführte Fördergutträger auf dieser belässt und auf der ersten Förderstrecke zugeführte Fördergutträger auf die zweite Förderstrecke umschleust.

Das Führungsglied, das beispielsweise oberhalb des Entscheidungsortes beziehungsweise der Entscheidungsstrecke angeordnet sein kann, weist bevorzugt wenigstens eine Auflauf-Schrägfläche auf, auf die ein jeweiliger, vorzugsweise von einem oberen Endabschnitt des Trägerkörpers gebildeter Zwangsführungsabschnitt der Fördergutträger aufläuft und die die Fördergutträger derartzwangsführt, dass der jeweilige Fördergutträger nach dem Entscheidungspunkt beziehungsweise der Entscheidungsstrecke längs einer bestimmten Förderstrecke weitergeführt wird, und zwar im Falle der ersten Führungsstellung längs der ersten Förderstrecke und im Falle der zweiten Führungsstellung längs der zweiten Förderstrecke.

Hinsichtlich der Ausgestaltung des Führungsglieds bestehen grundsätzlich viele Möglichkeiten. Beispielsweise kann das Führungsglied einen Körper mit einem seitlich von Auflauf-Schrägflächen begrenzten Führungskanal aufweisen, der einen sowohl in der ersten als auch in der zweiten Führungsstellung sowohl längs der ersten als auch längs der zweiten Förderstrecke zugeführte Fördergutträger empfangenden Empfangsabschnitt und einen die Fördergutträger in der ersten Führungsstellung definiert der ersten Förderstrecke und in der zweiten Führungsstellung definiert der zweiten Förderstrecke zuweisenden Abgabeabschnitt mit einer gegenüber dem Empfangsabschnitt geringeren seitlichen Weite umfasst. Dabei kann es vorteilhaft sein, wenn wenigstens der Empfangsabschnitt des Führungskanals, vorzugsweise der ganze Führungskanal, sich in Förderrichtung zunehmend seitlich verengt. Beispielsweise könnte sich der Empfangsabschnitt beziehungsweise der Führungskanal trichterartig verengen.

Es wurde schon angedeutet, dass eine Antriebsanordnung vorgesehen sein kann, die wenigstens ein der ersten Förderstrecke zugeordnetes, die Fördergutträger durch die Umschleusungsstation förderndes langgestrecktes erstes Mitnahmeelement, gegebenenfalls erste Mitnahmekette, und wenigstens ein der zweiten Förderstrecke zugeordnetes, die Fördergutträger durch die Umschleusungsstation förderndes langgestrecktes zweites Mitnahmeelement, gegebenenfalls zweite Mitnahmekette, aufweist.

Vor allem dann, wenn die Umschleusungsstation mit einer der ersten und der zweiten Förderstrecke gemeinsamen Entscheidungsstrecke beziehungsweise einem diesen Förderstrecken gemeinsamen Entscheidungsort ausgebildet ist, ist es zweckmäßig, dass die Fördergutträger in der Umschleusungsstation zumindest bereichsweise sowohl mit dem ersten Mitnahmeelement als auch mit dem zweiten Mitnahmeelement in Mitnahmeeingriff sind, wobei es im Falle der genannten Ausbildung der Umschleusungsstation mit gemeinsamer Entscheidungsstrecke beziehungsweise gemeinsamen Entscheidungsort zweckmäßig ist, dass die Fördergutträger zumindest innerhalb der Entscheidungsstrecke beziehungsweise im Bereich des Entscheidungsortes jeweils mit beiden Mitnahmeelementen in Mitnahmeeingriff sind.

Bei der Antriebsanordnung kann es sich um eine Antriebsanordnung handeln, die auch in anderen Streckenabschnitten der ersten beziehungsweise zweiten Förderstrecke, also beispielsweise auch vor und nach der Umschleusungsstation, für eine Förderung der Fördergutträger sorgt. Es kann sich bei der erwähnten Antriebsanordnung aber auch um eine speziell der Umschleusungsstation zugeordnete Antriebsanordnung handeln.

Nach einer bevorzugten Ausführungsform umfasst die Hängefördereinrichtung eine der ersten und der zweiten Förderstrecke zugeordnete Haupt-Antriebsanordnung und eine der Umschleusungsstation zugeordnete Zusatz-Antriebsanordnung. Die Haupt-Antriebsanordnung kann wenigstens ein Fördergutträger längs der ersten Förderstrecke mitnehmendes langgestrecktes erstes Haupt-Mitnahmeelement, gegebenenfalls erstes Reibband, und wenigstens ein Fördergutträger längs der zweiten Förderstrecke mitnehmendes langgestrecktes zweites Haupt-Mitnahmeelement, gegebenenfalls zweites Reibband, umfassen. Die Zusatz-Antriebsanordnung kann wenigstens ein der ersten Förderstrecke zugeordnetes, die Fördergutträger durch die Umschleusungsstation förderndes langgestrecktes erstes Zusatz-Mitnahmeelement, gegebenenfalls erste Mitnahmekette, und wenigstens ein der zweiten Förderstrecke zugeordnetes, die Fördergutträger durch die Umschleusungsstation förderndes langgestrecktes zweites Zusatz-Mitnahmeelement, gegebenenfalls zweite Mitnahmekette, aufweisen.

Es wird darauf hingewiesen, dass es prinzipiell möglich ist, ein einziges Mitnahmeelement längs mehrerer Förderstrecken zwecks Mitnahme der Fördergutträger zu führen. Aus diesem Grund soll der hier verwendete Begriff "langgestrecktes Mitnahmeelement" auch die Bedeutung "Mitnahmeelementabschnitt" mit umfassen.

Die Haupt-Antriebsanordnung ist vorzugsweise dafür ausgelegt, ein Aufstauen von Fördergutträgern bei laufendem Antrieb der Haupt-Mitnahmeelemente (also laufender Mitnahmeelemente) zu ermöglichen. Die Zusatz-Antriebsanordnung ist bevorzugt dafür ausgelegt, definierte Durchlaufzeiten für einen Durchlauf der Fördergutträger durch die Umschleusungsstation zu gewährleisten, wobei zum Erreichen der definierten Durchlaufzeiten gegebenenfalls auf die Ermöglichung eines Aufstauens der Fördergutträger bei laufendem Mitnahmeelement verzichtet werden kann, die Zusatz-Antriebsanordnung im Gegensatz zur bevorzugten Ausbildung der Haupt-Antriebsanordnung also nicht zwingend staufähig ist.

Zur Kopplung der Fördergutträger mit den Zusatz-Mitnahmeelementen können die Zusatz-Mitnahmeelemente Eingriffsglieder tragen, die vorzugsweise oberhalb der Laufrollen an den Fördergutträgern formschlüssig oder kraftschlüssig angreifen und einen form- oder kraftschlüssigen Mitnahmeeingriff herstellen. Die Eingriffsglieder können in Eingriffs-Aussparungen der Fördergutträger eingreifen unter Herstellung des Mitnahmeeingriffs. Im Falle des kraftschlüssigen Mitnahmeeingriffs beruht dieser vorzugsweise auf elastischen Reaktionskräften der im Zuge der Herstellung des Mitnahmeeingriffs elastisch verformten Eingriffsglieder oder der Mitnahmeeingriff ist durch die elastischen Reaktionskräfte zumindest verstärkt.

Je nach Ausführung der Haupt-Antriebsanordnung kann es zweckmäßig sein, dass die Haupt-Mitnahmeelemente an der Umschleusungsstation vorbeigeführt sind, beispielsweise um im Falle von Reibbändern Probleme hinsichtlich der Führung der Reibbänder zu vermeiden oder/und zum Antrieb der Reibbänder zu überwindende Reibungskräfte zwischen den Reibbändern und langgestrecktes einer jeweiligen Reibbandführung zu reduzieren. In diesem Zusammenhang ist es äußerst zweckmäßig, wenn in einem Eingangsbereich der Umschteusungsstation eine Übergabestation (gegebenenfalls umfassend eine gesonderte, der ersten Förderstrecke zugeordnete erste Übergabestation und eine gesonderte, der zweiten Förderstrecke zugeordnete zweite Übergabestation) vorgesehen ist, in der der Mitnahme-Eingriff zwischen den Fördergutträgern und dem jeweiligen Haupt-Mitnahmeelement aufgehoben und der Mitnahme-Eingriff zwischen den Fördergutträgern und dem jeweiligen Zusatz-Mitnahmeelement hergestellt wird. Ferner ist es in diesem Zusammenhang äußerst zweckmäßig, wenn in einem Ausgangsbereich der Umschleusungsstation eine weitere Übergabestation (gegebenenfalls umfassend eine gesonderte, der ersten Förderstrecke zugeordnete erste Übergabestation und eine gesonderte, der zweiten Förderstrecke zugeordnete zweite Übergabestation) vorgesehen ist, in der der Mitnahmeeingriff zwischen den Fördergutträgern und dem jeweiligen Zusatz-Mitnahmeelement aufgehoben und der Mitnahmeeingriff zwischen den Fördergutträgern und dem jeweiligen Haupt-Mitnahmeelement hergestellt wird.

Regelmäßig wird es sinnvoll sein, in einem Eingangsbereich der Umschleusungsstation eine der ersten Förderstrecke zugeordnete Durchlasssperre oder/und eine der zweiten Förderstrecke zugeordnete Durchlasssperre vorzusehen zum wahlweisen Sperren und Freigeben des Durchgangs durch die Umschleusungsstation für die Fördergutträger. Vorzugsweise ermöglicht die jeweilige Durchlasssperre eine Vereinzelung der Fördergutträger, so dass beispielsweise Sortieraufgaben und Warenvereinzelungsaufgaben mittels der Umschleusungsstation erfüllt werden können.

Für vielfältige Einsatzmöglichkeiten, beispielsweise die genannten Sortieraufgaben, ist es äußerst zweckmäßig, wenn in einem/dem Eingangsbereich der Umschleusungsstation eine der ersten Förderstrecke zugeordnete Fördergutträger-Identifikationsanordnung, gegebenenfalls Barcode-Leseanordnung, oder/und eine derzweiten Förderstrecke zugeordnete Fördergutträger-Identifikationsanordnung, gegebenenfalls Barcode-Leseanordnung, vorgesehen ist. In diesem Zusammenhang ist es besonders zweckmäßig, wenn die Umschleusungsstation in Abhängigkeit von Fördergutträger-Identifikationen mittels der Fördergutträger-Identifikationsanordnung beziehungsweise Fördergutträger-Identifikationsanordnung enbetätig bar ist. Eine Betätigung der Umschleusungsstation kann eine Betätigung der Durchlasssperre beziehungsweise der Durchlasssperren oder/und eine Betätigung des Fördergutträger-Führungsglieds umfassen.

Für eine hohe Betriebssicherheit ist es häufig zweckmäßig, wenigstens im Bereich der Umschleusungsstation eine Absturzsicherung vorzusehen, die einen Absturz der Fördergutträger von einer betreffenden Laufschienenstrecke verhindert. Je nach Ausbildung der Laufschienenstrecke könnte nämlich unter Umständen die Gefahr eines Absturzes der Fördergutträger von der Laufschienenstrecke bestehen, beispielsweise unter Einwirkung von Fliehkräften oder/und im Zuge des Lösens oder/und Herstellens eines Mitnahmeeingriffs mit einem zugeordneten Mitnahmeelement. Die Absturzsicherung kann vorteilhaft wenigstens eine längs der Laufschienenstrecke in definiertem Abstand zu dieser verlaufende Sicherungsschiene umfassen.

Die Erfindung betrifft ferner eine Umschleusungsstation für eine Hängefördereinrichtung wie vorangehend beschrieben. Die Umschleusungsstation ist erfindungsgemäß dafür ausgebildet, wahlweise Fördergutträger in einer ersten Förderstrecke auf eine zweite Förderstrecke umzuschleusen oder auf der ersten Förderstrecke zu belassen, sowie wahlweise Fördergutträger von der zweiten Förderstrecke auf die erste Förderstrecke umzuschleusen oder auf der zweiten Förderstrecke zu belassen. Allgemein gesprochen kann die Umschfeusungsstation entsprechend der vorangehend beschriebenen Umschleusungsstation der erfindungsgemäßen Hängefördereinrichtung ausgebildet sein.

Die Erfindung wird im Folgenden anhand von in den Figuren dargestellten Ausführungsbeispielen näher erläutert.
- Fig. 1: zeigt in einer perspektivischen Darstellung einen herausgebrochen gezeichneten Abschnitt einer Laufschiene einer Hängefördereinrichtung mit einer Umlenkstation und mit einem an der Laufschiene einseitig hängend geführten Fördergutträger.
- Fig. 2: zeigt eine Draufsicht (im Wesentlichen entsprechend einem Schnitt nach Linie II-II in Fig. 5) auf ein Ausführungsbeispiel einer erfindungsgemäßen Umschleusungsstation der Hängefördereinrichtung, die ein Umschleusen von Fördergutträgern zwischen einer ersten, durch die Umschleusungsstation führenden Förderstrecke und einer zweiten, durch die Umschleusungsstation führenden Förderstrecke ermöglicht.
- Fig. 3: zeigt eine Darstellung der Umschteusungsstation im Wesentlichen entsprechend einem teilweisen Schnitt durch die Anordnung der Fig. 2 nach Linie III-III in Fig. 2.
- Fig. 4: zeigt eine Detailvergrößerung der Darstellung der Fig. 3.
- Fig. 5: zeigt einen Schnitt durch die Anordnung der Fig. 2 nach Linie V-V in Fig. 2, wobei Fig. 5 einen mittleren, sich rechts an die Darstellung der Fig. 3 anschließenden Bereich der Umschleusungsstation zeigt.
- Fig. 6: zeigt einen Schnitt durch eine Laufschienenstrecke der Umschleusungsstation in einem Förderstreckenbereich, in dem ein Mitnahmeeingriff zwischen einem jeweiligen Fördergutträger und einer Mitnahmekette der Umschleusungsstation hergestellt ist.
- Fig. 7, 8: zeigen zwei mögliche Stellungen eines FördergutträgerFührungsglieds der Umschleusungsstation zum Zuweisen der Fördergutträger für die weitere Förderung entweder an die erste oder an die zweite Förderstrecke.
- Fig. 9: zeigt eine bogenförmige Laufschiene der Umschleusungsstation.

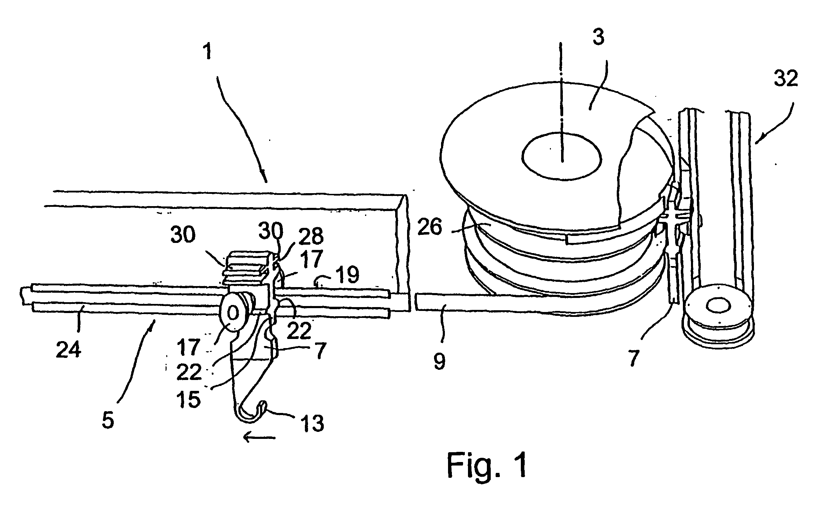

Eine Umschleusungsstation nach der Erfindung kann beispielsweise in eine Hängefördereinrichtung integriert werden, wie sie ausschnittsweise in Fig. 1 dargestellt ist. Die in Fig. 1 gezeigte Hängefördereinrichtung ist aus der EP 0 582 047 B1 bekannt. Sie umfasst einen ersten Förderkreis 1 in Form einer länglichen Förderschleife mit Umlenktrommeln 3 und mit Laufschienen 5 in den Geradeaus-Streckenbereichen zwischen den Umlenktrommeln 3. In Fig. 1 sind von dem Förderkreis 1 lediglich die im Bezug auf die Betrachtungsrichtung rechts liegende Umlenktrommel 3 und die in Bezug auf die Betrachtungsrichtung vorne liegende Laufschiene 5 dargestellt. Der Förderkreis 1 weist auf der der Umlenktrommel 3 links gegenüberliegenden Seite eine weitere Umlenktrommel und rückseitig der Laufschiene 5 eine weitere entsprechende Laufschiene auf.

Bei den zu transportierenden Fördergutträgern 7 handelt es sich im Beispielsfall um sogenannte Bügelträger zum Transport von an Kleiderbügeln hängenden Kleidungsstücken. Wie in Fig. 1 erkennbar, weist der Fördergutträger 7 an seinem unteren Ende einen Haken 13 auf. In diesen Haken 13 kann der Haken eines Kleiderbügels eingehängt werden. Der Fördergutträger hat einen im Wesentlichen vertikal ausgerichteten Trägerkörper 15 mit zwei an den einander entgegengesetzten Lateralseiten des Trägerkörpers 15 abstehenden Laufrollen 17. Während der Bewegung längs einer Laufschiene 5 stützt sich der Fördergutträger 7 mit jeweils einer Laufrolle 17 an einer Lauffläche einer nach oben hin offenen Führungsrille 19 der Laufschiene 5 ab, so dass er seitlich an der Laufschiene angehängt und in Längsrichtung der Laufschiene 5 geführt ist. Unterhalb der Laufrollen 17 ist jeweils ein seitlicher Vorsprung mit einer äußeren Reibfläche 22 an dem Trägerkörper 15 vorgesehen. In Fig. 1 steht einer der Vorsprünge mit seiner Reibfläche 22 an dem mittels der Führung 24 in Längsrichtung der Laufschiene 5 geführten Reibband 9 reibschlüssig an, so dass das Reibband 9 den Fördergutträger 7 zur Bewegung längs der Laufschiene 5 mitnimmt.

Die in Fig. 1 gebrochen dargestellte Laufschiene 5 ist mit ihrem rechten Ende nahe an die Umlenktrommel 3 herangeführt, so dass der mit 26 gekennzeichnete Förderflansch an der Umlenktrommel 3 in die seitliche Nut 28 eines sich der Umlenktrommel 3 unmittelbar annähernden Fördergutträgers 7 eingreifen kann, um den Fördergutträger 7 von der Laufschiene 5 zu übernehmen. Dabei stützt sich der Fördergutträger 7 mit einem die Nut 28 oben begrenzenden Dachsteg 30 an der Oberseite des Förderflansches 26 ab. Der Fördergutträger 7 wird dann entsprechend der Drehung der Umlenktrommel 3 umgelenkt. Eine hier nicht näher erläuterte, ortsfest angeordnete Bogenschiene hintergreift den oberen Endabschnitt des Fördergutträgers 7 während der Umlenkbewegung, um den Fördergutträger gegen radiales Abrutschen von dem Fördersteg 26 zu sichern. Gemäß Fig. 1 kann ein von der Umlenktrommel 3 aufgenommener Fördergutträger 7 wahlweise an einen zweiten Förderkreis 32 übergeben werden, der vom Prinzip her wie der erste Förderkreis 1 ausgebildet sein kann.

Die vorliegende Erfindung schafft eine Möglichkeit, bei einer Hängefördereinrichtung der in Fig. 1 gezeigten Art eine Übergabe des Fördergutträgers 7 von einer Förderstrecke auf eine andere Förderstrecke durchzuführen, ohne hierzu auf Umlenktrommeln 3 oder dergleichen angewiesen zu sein. Die Erfindung schafft speziell die Möglichkeit, eine Übergabe zwischen zueinander parallel verlaufenden Förderstrecken vorzusehen. So kann die nachstehend näher beschriebene Umschleusungsstation nach der Erfindung z. B. in dem in Fig. 1 dargestellten geradlinigen Bereich der Laufschiene 5 integriert werden, um Fördergutträger 7 aus der Laufschiene 5 bedarfsweise auszuschleusen und einer parallel hierzu verlaufenden Laufschiene eines anderen Förderkreises der Hängefördereinrichtung zuzuführen, die Fördergutträger also auf diese Laufschiene des anderen Förderkreises einzuschleusen. Man kann zweckmäßigerweise von einem Umschleusen der Fördergutträger von der einen Förderstrecke zur anderen Förderstrecke sprechen, wobei erfindungsgemäß ein (wahlweises) Umschleusen in beiden Richtungen, also von der ersten Förderstrecke zur zweiten Förderstrecke oder umgekehrt von der zweiten Förderstrecke zur ersten Förderstrecke möglich ist.

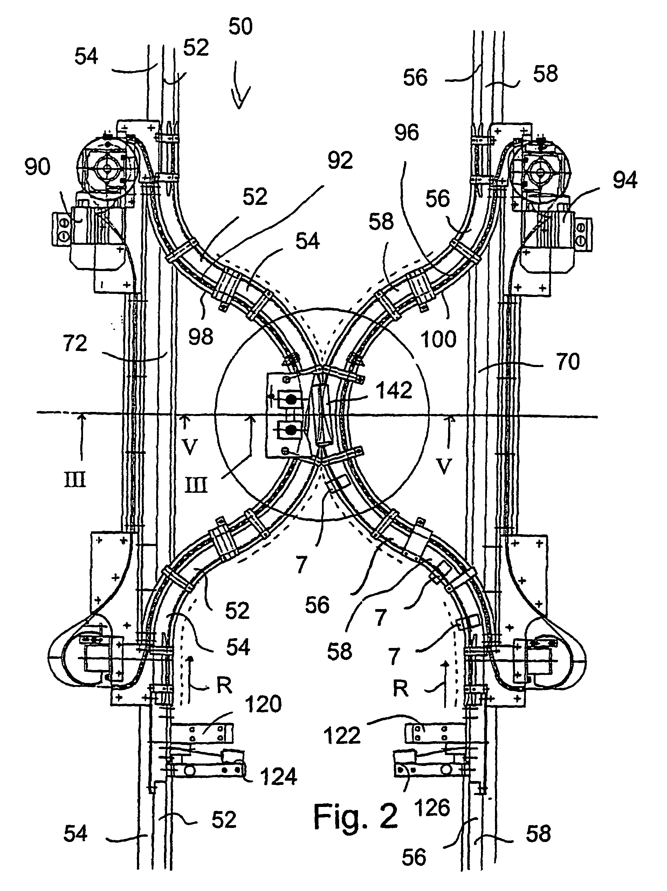

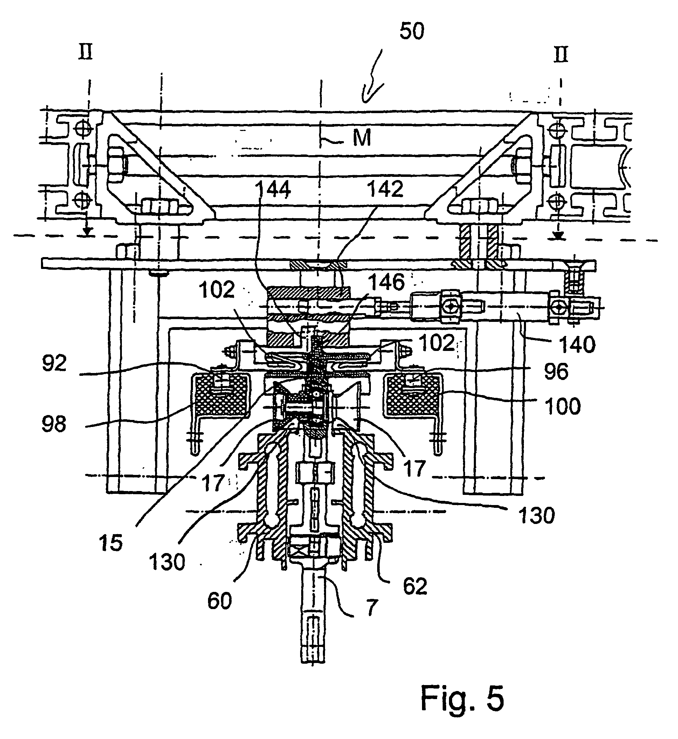

Fig. 2 ist eine Draufsicht (entsprechend Schnitt II-II in Fig. 5) auf ein Ausführungsbeispiel einer derartigen Umschleusungsstation 50. Es sind zwei Laufschienenstrecken 52 und 56 zu erkennen, die zur Förderung von Fördergrundträgern 7 dienen, und von denen beispielsweise die Laufschienenstrecke 52 einer ersten Förderstrecke 54 und die zweite Laufschienenstrecke 56 einer zweiten Förderstrecke 58 zugehört. Die beiden Förderstrecken können beispielsweise zu verschiedenen, jeweils wenigstens zwei Umlenktrommeln umfassenden Förderkreisen gehören.

Die Laufschienenstrecken 52 und 56 verlaufen in Förderrichtung zuerst parallel zueinander, verlaufen dann im Bereich der Umschteusungsstation 50 bogenförmig aufeinander zu, und verlaufen dann von einem Punkt maximaler seitlicher Annäherung wieder bogenförmig auseinander, bis sie wieder in parallel zueinander verlaufende Streckenabschnitte der Laufschienenstrecken 52 und 56 übergehen.

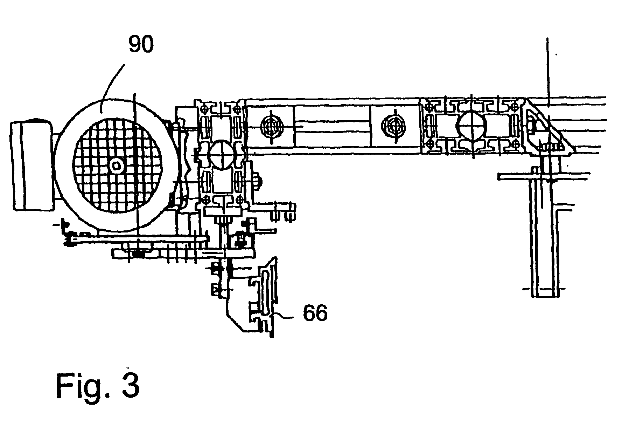

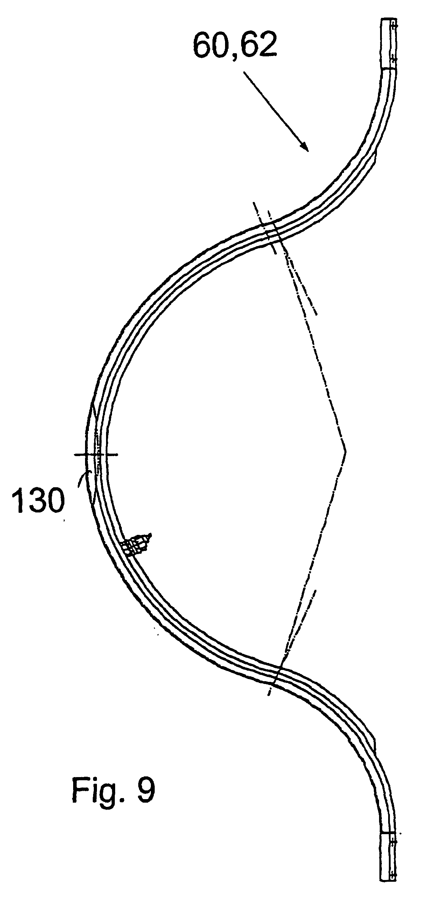

Sowohl die geradlinigen Laufstreckenabschnitte als auch die bogenförmigen Laufschienenabschnitte können von entsprechend ausgeführten Laufschienenbauteilen 60, 62, 64 beziehungsweise 66 gebildet sein, die an zugehörigen Tragprofilen oder sonstigen Halterungen angebracht, beispielsweise mittels im Querschnitt hakenförmigen Abschnitten der Laufschienenbauteile eingehakt sein können. Es wird auf die Fig. 3, 4, 5 und 6 verwiesen, wobei in Fig. 5 die die Laufschienenbauteile 60 und 62 tragenden Tragprofile nicht dargestellt sind. Ein bogenförmiges Laufschienenbauteil 60 beziehungsweise 62, das Teil des bogenförmigen Abschnitts der Laufschienenstrecke 52 beziehungsweise 56 sein könnte, ist in Fig. 9 gezeigt.

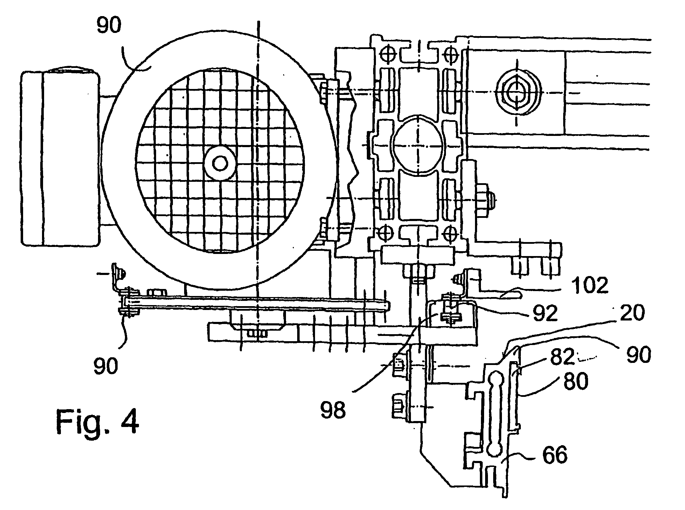

Im Hinblick auf die strukturelle Stabilität der Hängefördereinrichtung sowie auf eine einwandfreie Führung der Reibbänder der beiden Förderstrecken, sind die Laufschienen im Bereich der Umlenkstation an sich geradlinig durchgehend ausgeführt. Entsprechende geradlinige Laufschienenabschnitte 70 und 72 sind in Fig. 2 zu erkennen. In den einteilig oder mehrteilig durchgehend ausgeführten Laufschienenstrang der ersten beziehungsweise zweiten Förderstrecke sind allerdings bogenförmige Laufschienenbauteile samt entsprechenden Tragprofilen integriert und derart an den geradlinigen Laufschienenabschnitten angeschlossen, dass in Fig. 2 von unten kommende Fördergutträger 7 auf den jeweiligen bogenförmigen Laufschienenstreckenabschnitt übergehen, so dass über die die Umschleusungsstation 50 gewissermaßen umgehenden Laufschienenstrecken 70 und 72 keine Fördergutträger geführt werden. Das zur Förderung der Fördergutträger längs der ersten Förderstrecke 54 dienende Reibband 80, und ein entsprechendes, zur Förderung der Fördergutträger längs der zweiten Förderstrecke 58 dienendes Reibband folgend allerdings nicht den bogenförmigen Laufschienenstreckenabschnitten, sondern verlaufen in einer Reibbandführung 82, die am betreffenden, zur "Umgehungs-Laufschienenstrecke" 70 beziehungsweise 72 zugehörigen Laufschienenbauteil (Laufschienenbauteil 66 in Fig. 4) eingeschnappt ist.

Zur Förderung der Fördergutträger 7 durch die Umschleusungsstation 50 dient eine gesonderte Antriebsanordnung, umfassend eine vermittels eines Antriebsmotors 90 antreibbare, als Endloskette geführte Mitnahmekette 92 sowie eine vermittels eines Antriebsmotors 94 antreibbare, als Endloskette geführte Mitnahmekette 96. Die beiden Mitnahmeketten 92 und 96 sind jeweils in einer Kettenführung 98 beziehungsweise 100 geführt, die beispielsweise in die Laufschienenbauteile 60, 62 haltende Tragprofile integriert oder an diesen angebracht sein können.

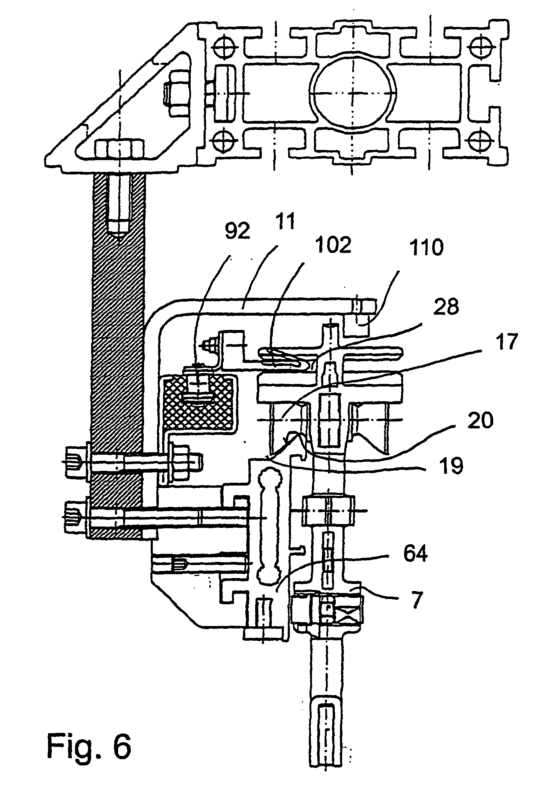

Die Mitnahmeketten 92 und 96 weisen jeweils in definierten Abständen an einem jeweiligen Kettensegment angebrachte Eingriffsglieder 102 auf, die in die vom Dachsteg 30 (vgl. Fig. 1) nach oben begrenzte Nut 28 (vgl. Fig. 1) eingreifen und den betreffenden Fördergutträger 7 entsprechend der Bewegung der Mitnahmekette 92 beziehungsweise 96 längs der Laufschienenstrecke mitnehmen. Entsprechend der Darstellung in Fig. 5 und Fig. 6 können die Eingriffsglieder 102 mit einem biegeelastischen Eingriffsabschnitt ausgeführt sein, der in der Nut 28 gegen elastische Rückstellkräfte des jeweiligen Eingriffsabschnitts eingespannt ist beziehungsweise eingespannt wird und demgemäß für eine zuverlässige kraftschlüssige Kopplung der betreffenden Mitnahmekette einerseits und des betreffenden Fördergutträgers andererseits sorgt. Man könnte anstelle einer federelastischen Ausgestaltung der Eingriffsglieder auch daran denken, dass diese formschlüssig in zugeordnete Ausnehmungen der Fördergutträger eingreifen und diese formschlüssig mitnehmen.

Entsprechend den Darstellungen in Fig. 5 und 6 können die Fördergutträger 7 bei der Mitnahme durch die betreffende Mitnahmekette 92 beziehungsweise 96 auf den Laufschienenbauteilen (Bezugszeichen 60, 62 in Fig. 5; Bezugszeichen 64 in Fig. 6) in der oben mit Bezugnahme auf Fig. 1 erläuterten Weise, nämlich unter abrollendem Eingriff der der Laufschienenstrecke zugeordneten Laufrolle 17 in die Führungsrille 19 der Laufschienenstrecke, geführt sein, wobei die konische Ausgestaltung der Laufrollen 17 und die die in Querschnitt schräg ausgeführte, die Führungsrille 19 begrenzende Lauffläche 20 (Fig. 6) für eine zuverlässige Seitenführung der Fördergutträger 7 sorgen. Es ist grundsätzlich aber auch möglich, dass die Führung der Fördergutträger allein über die Mitnahmeketten und deren Eingriffsglieder 102 erfolgt und die Fördergutträger beispielsweise leicht von dem betreffenden Laufschienenbauteil abgehoben werden.

Der Eingriff zwischen den Eingriffsgliedern der betreffenden Mitnahmekette 92 und 96 und den Fördergutträgern wird zwangsläufig dadurch hergestellt, dass die Fördergutträger unter der Mitnahmewirkung des betreffenden Reibbands in einen Übergabebereich der betreffenden Förderstrecke hineinfahren, indem die von der Seite her sich dem Fördergutträger nähernden Eingriffsglieder 102 an den Fördergutträger 7 seitlich herankommen und in die jeweilige Nut 28 eingreifen, gegebenenfalls unter elastischem Verbiegen des Eingriffsabschnitts. Da in diesem Bereich der Förderstrecke in seitlicher Richtung auf die Fördergutträger wirkende Kräfte auftreten oder auftreten können, ist es zweckmäßig, eine einen Absturz der Fördergutträger von der jeweiligen Laufschienenstrecke verhindernde Absturzsicherung, beispielsweise in Form einer Sicherungsschiene 110, vorzusehen (Fig. 6), die längs der betreffenden Förderstrecke verläuft und durch Tragbügel 112 oder dergleichen gehalten sein kann. Eine entsprechende Absturzsicherung ist auch wenigstens in jenen Bereichen der Förderstrecken sinnvoll, in denen auf die Fördergutträger wirkende Fliehkräfte auftreten können, die die Fördergutträger von den Laufschienenstrecken abstürzen lassen könnten. In Fig. 2 sind durch gestrichelte Linien jene Laufschienenstreckenabschnitte markiert, in denen es besonders sinnvoll wäre, entsprechende Absturzsicherungsmaßnahmen zur Verhinderung eines Absturzes der Fördergutträger von der betreffenden Laufschiene zu treffen.

Bei der in den Figuren gezeigten Ausführungsform ist im Eingangsbereich der Umschleusungsstation 50 eine der ersten Förderstrecke zugeordnete Durchlasssperre 120 und eine der zweiten Förderstrecke 58 zugeordnete Durchlasssperre 122 vorgesehen, die dazu dient, wahlweise Fördergutträger 7 in Pfeilrichtung (Pfeil R) durchzulassen oder entgegen der Förderwirkung des Reibbands zurückzuhalten, gegebenenfalls unter Aufstauen mehrerer Fördergutträger. Die Durchlasssperren sind derart ausgebildet, dass sie einzelne Fördergutträger in definierter Weise durchlassen können, so dass eine Vereinzelung von eventuell aufgestauten Fördergutträgern möglich ist. Stromaufwärts, also in Förderrichtung vor den Durchlasssperren, ist jeweils eine Barcode-Leseanordnung 124 beziehungsweise 126 vorgesehen, die anhand unterhalb der Reibflächen 22 angebrachten Barcodes die einzelnen Fördergutträger beziehungsweise das von diesen geförderte Fördergut identifizieren können. Bevorzugt lassen sich die Durchlasssperren 120, 122 in Abhängigkeit von den durch die Barcode-Leseanordnungen 124, 126 erhaltenen Fördergutträger-Identifizierungen betätigen, beispielsweise zum Ausführen von Sortieraufgaben oder dergleichen.

Zur Funktionsweise und zum Aufbau der Umschleusungsstation 50 im Detail: Die bogenförmigen Laufschienenstreckenabschnitte sind derart geführt, dass im Bereich der engsten Annäherung der beiden Laufschienenstrecken 52, 56 nur noch ein Fördergutträger 7 zwischen die beiden Laufschienenbauteile 60 und 62 passt, und zwar nur derart, dass beide Laufrollen 17 in der in Fig. 5 gezeigten Weise mit den beiden Laufschienenbauteilen 60 und 62 in Eingriff kommen beziehungsweise oberhalb der Laufschienenbauteile verlaufen. Hierzu weisen die Laufschienenbauteile jeweils eine Aussparung 130 in einem die Führungsrille 19 zum Fördergutträger hin begrenzenden, die Lauffläche 20 aufweisenden Schienenabschnitt 132 (vgl. Fig. 4) auf, der eine seitliche Relativbewegung des Fördergutträgers 7 relativ zum Laufschienenbauteil der anderen Förderstrecke beziehungsweise relativ zum Laufschienenbauteil der ursprünglichen Förderstrecke ermöglicht, um die zuvor freie Laufrolle 17 mit dem Laufschienenbauteil dieser anderen Förderstrecke herstellen zu können beziehungsweise wahlweise den Eingriff der linken Laufrolle mit dem linken Bauschienenbauteil oder der rechten Laufrolle mit dem rechten Laufschienenbauteil lösen zu können, so dass der Fördergutträger 7 nach Zuweisung an eine der beiden Förderstrecken entweder auf der ersten oder auf der zweiten Förderstrecke weiterbefördert wird. Wie in Fig. 5 zu erkennen, verlaufen die beiden Förderstrecken innerhalb der Umschleusungsstation über einen gemeinsamen, von beiden Laufschienenbauteilen 60 und 62 gebildeten Streckenabschnitt, in dem die linke und die rechte Laufrolle 17 auf der jeweils zugeordneten Laufschienenstrecke abrollen oder oberhalb dieser weiterbewegt werden und in dem beide Mitnahmeketten 92 und 96 über ein jeweiliges Eingriffsglied 102 mit einem jeweiligen, sich innerhalb des gemeinsamen Streckenabschnitts befindenden Fördergutträger 7 in Eingriff stehen. Es erfolgt somit eine Zusammenführung der über die beiden Förderstrecken der Umschleusungsstation 50 zugeführten Fördergutträger innerhalb der Umschleusungsstation 50, wobei es für den Fördergutträger 7 nach dem Zusammenführen keinen Unterschied macht, ob er der Umschleusungsstation über die erste Förderstrecke oder über die zweite Förderstrecke zugeführt wurde.

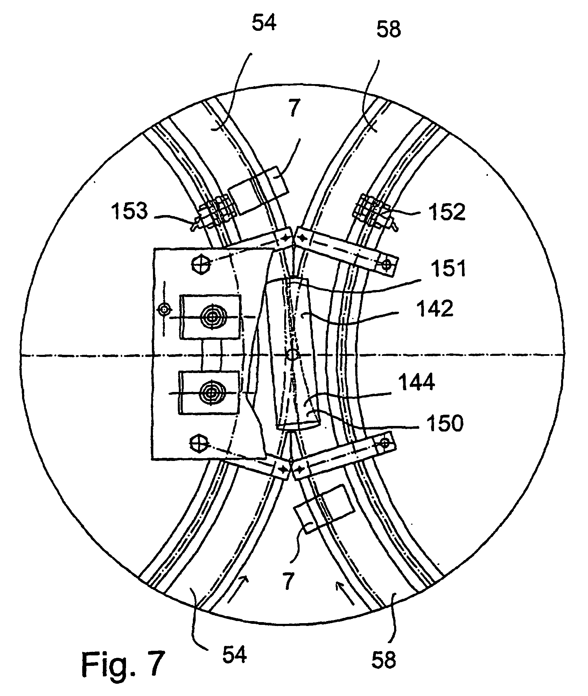

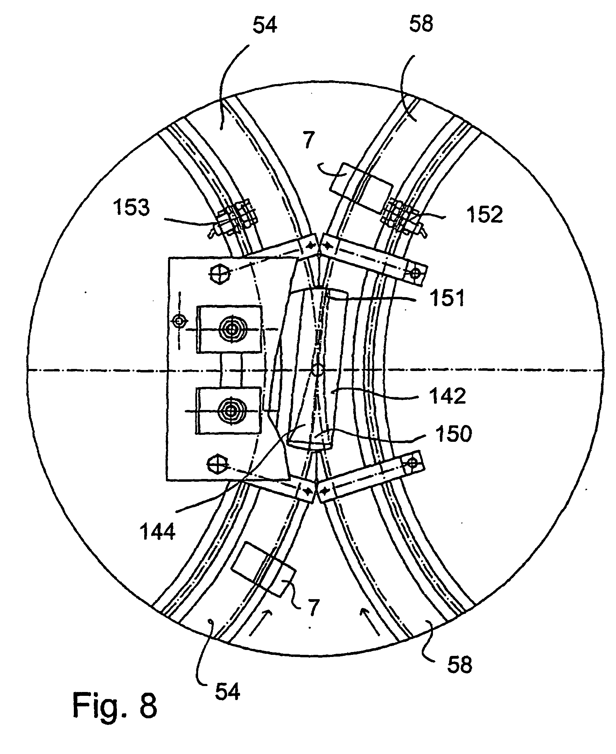

Zur Zuweisung eines jeweiligen, sich innerhalb des gemeinsamen Streckenabschnitts unter der Wirkung der Mitnahmeketten 92, 96 bewegenden Fördergutträgers 7 entweder an die erste oder an die zweite Förderstrecke für die weitere Förderung ist ein mittels eines Schwenkantriebs 140, beispielsweise eines doppelt wirkenden Pneumatikzylinders 140, schwenkbares Führungsglied 142 oberhalb des gemeinsamen Streckenabschnitts schwenkbar gelagert, das einen Führungskanal 144 aufweist, der nach unten und in Förderrichtung und entgegen der Förderrichtung offen ist und einen nach oben vom Trägerkörper 15 vorstehenden Zwangsführungszapfen oder Zwangsführungssteg 146 aufnimmt, der an seitlichen, den Führungskanal 144 begrenzenden Schrägflächen des Führungsglieds 142 abgleitet und für eine Führung des Fördergutträgers entweder entsprechend dem Verlauf der Laufschienenstrecke 52 oder der Laufschienenstrecke 56 sorgt, so dass der Fördergutträger nach Austritt des Zwangsführungsstegs 146 beziehungsweise des Zwangsführungszapfens 146 aus dem Führungskanal 144 entweder entlang der ersten Förderstrecke 54 oder entlang der zweiten Förderstrecke 58 weiter befördert wird. Es wird hierzu auf die Fig. 7 und 8 verwiesen, die das Führungsglied 142 in einer ersten Führungsstellung (Fig. 7) und in einer zweiten Führungsstellung (Fig. 8) zeigen, wobei im Falle der ersten Führungsstellung die Fördergutträger 7 der ersten Förderstrecke 54 und im Falle der zweiten Führungsstellung die Fördergutträger 7 der zweiten Förderstrecke 58 für die weitere Förderung zugewiesen werden. Dies gilt unabhängig davon, auf welcher Förderstrecke die Fördergutträger 7 dem Führungsglied 142 zugeführt werden. Der Führungskanal 144 weist nämlich einen Empfangsabschnitt 150 mit einer derartigen seitlichen Weite auf, das sowohl auf der ersten Förderstrecke 54 zugeführte Fördergutträger 7 als auch auf der zweiten Förderstrecke 58 zugeführte Fördergutträger in beiden Führungsstellungen in den Führungskanal 144 eintreten. Die seitliche Weite des Führungskanals 144 nimmt kontinuierlich ab und endet in einem Abgabeabschnitt 151, der je nach Führungsstellung die Fördergutträger definiert entweder der ersten oder der zweiten Förderstrecke für die weitere Förderung zuweist. Die Bahnen, denen die Zwangsführungszapfen oder Stege 146 durch die Umschleusungsstation 50 folgen, sind in Fig. 7 und Fig. 8 strichpunktiert eingezeichnet. Man erkennt, dass die betreffende Bahn der ersten beziehungsweise der zweiten Führungsstrecke durch die Mitte des Abgabeabschnitts 151 des in der entsprechenden Führungsstellung angeordneten Führungsglieds 142 verläuft.

Zur Bewerkstelligung von Warensortier- und Verteilaufgaben ist das Führungsglied 142 vermittels des Antriebs 140 bevorzugt in Abhängigkeit von den Identifikationsergebnissen der Barcode-Leseanordnungen 124, 126 betätigbar, vorzugsweise in Synchronisation mit einer Betätigung der Durchlasssperren 120, 122. Die Synchronisation kann auf einfache Weise auf Grundlage von Signalen von Fördergutträgerdetektoren 152, 153 erfolgen, die anzeigen, dass ein Fördergutträger 7 aus dem Führungskanal 144 ausgetreten und entweder der ersten oder der zweiten Förderstrecke für die weitere Förderung zugewiesen worden ist.

Wie in den Figuren zu erkennen, weist die als Beispiel dienende Hängefördereinrichtung diverse weitere Komponenten auf, deren Zweck und Ausgestaltung für den Fachmann aus den Figuren zu erkennen ist beziehungsweise für die Erfindung ohne nähere Bedeutung ist. So sind diverse Tragprofile und sonstige Tragelemente zu erkennen, an denen die verschiedenen Komponenten der beiden Förderstrecken und der Umschleusungsstation aufgehängt sind.

In Bezug auf Fig. 5 soll noch erwähnt werden, dass das Führungsglied 142 teilgeschnitten dargestellt ist, wobei ein ungeschnitten dargestellter mittlerer Abschnitt des Führungsglieds eine Sicht auf das Führungsglied 142 in Förderrichtung repräsentiert, ein oberer, geschnitten dargestellter Abschnitt einen Schnitt in einer Schnittebene repräsentiert, in der der Schwenkantrieb 140 am Führungsglied 142 angreift und ein unterer, geschnitten dargestellter Abschnitt eine Schnittebene repräsentiert, die der Schnittlinie V-V in Fig. 2 entspricht oder in Förderrichtung kurz vor dieser liegt. Diese Schnittebene liegt auch dem geschnittenen Bereich des Fördergutträgers 7 in Fig. 5 zugrunde, was daraus zu erkennen ist, dass der Fördergutträger 7 im Wesentlichen symmetrisch zu einer vertikalen Mittellinie M angeordnet ist. Der Zwangsführungszapfen oder Steg 146 liegt dementsprechend an einer rechten, den Führungskanal 144 begrenzenden Schrägfläche des Führungsglieds 142 an. In Fig. 5 ist ferner zu erkennen, dass das Führungsglied 142 momentan in der ersten Führungsstellung angeordnet ist, in der es den Fördergutträger 7 der ersten Förderstrecke 54 zuweisen wird.

Es wird noch darauf hingewiesen, dass anstelle des die Fördergutträger antreibenden Kettenantriebs 92, 96 der Umschleusungsstation diese auch einen andersartigen Antrieb für die Fördergutträger aufweisen kann, beispielsweise umfassend wenigstens ein Reibband. Es sollte auch erwähnt werden, dass der Antrieb prinzipiell an beliebiger Stelle an den Fördergutträgern angreifen kann, um diese mitzunehmen.

## Patentansprüche

1. Hängefördereinrichtung zur Förderung von Fördergutträgern (7) längs Förderstrecken (54, 58), umfassend eine Laufschienenanordnung (52, 56) mit den Förderstrecken zugeordneten Laufschienen (52, 56), an denen die Fördergutträger (7) führbar sind,
wobei die Fördergutträger (7) jeweils einen Trägerkörper (15) mit zwei vom Trägerkörper zu entgegengesetzten Seiten abstehenden Laufrollen (17) zum Abrollen auf den Förderstrecken (54, 58) zugeordneten Laufschienen (52, 56) aufweisen,
wobei den Förderstrecken jeweils wenigstens eine Laufschiene (52, 56) zugeordnet ist, die eine nach oben offene Laufrollen-Führungsrille (19) aufweist zur Führung von mit jeweils einer, bezogen auf die Förderrichtung linken oder rechten Laufrolle (17) an der Laufschiene hängenden, mit dieser Laufrolle in die Führungsrille eingreifenden und sich mit dem Trägerkörper (15) nach unten hin in einen Förderstrecken-Freiraum seitlich neben der Laufschiene erstreckenden Fördergutträgern,
wobei eine Umschleusungsstation (50) vorgesehen ist, die dafür ausgebildet ist, wahlweise Fördergutträger (7) von einer ersten Förderstrecke (54) auf eine zweite Förderstrecke (58) umzuschleusen oder auf der ersten Förderstrecke (54) zu belassen, sowie wahlweise Fördergutträger (7) von der zweiten Förderstrecke (58) auf die erste Förderstrecke (54) umzuschleusen oder auf der zweiten Förderstrecke (58) zu belassen, wobei das Umschleusen zwischen der ersten (54) und der zweiten (58) Förderstrecke einen Wechsel von einem Hängen der Fördergutträger (7) mit den linken Laufrollen (17) an einer betreffenden Laufschiene zu einem Hängen der Fördergutträger (7) mit den rechten Laufrollen (17) an einer betreffenden Laufschiene beziehungsweise einen Wechsel von einem Hängen der Fördergutträger (7) mit den rechten Laufrollen (17) an einer betreffenden Laufschiene zu einem Hängen der Fördergutträger (7) mit den linken Laufrollen (17) an einer betreffenden Laufschiene vorsieht,
wobei die erste Förderstrecke (54) eine durch die Umschleusungsstation (50) durchgehend hindurchführende erste Laufschienenstrecke (60) und die zweite Förderstrecke (58) eine durch die Umschleusungsstation (50) durchgehend hindurchführende zweite Laufschienenstrecke (62) aufweist,
wobei von der ersten und der zweiten Laufschienenstrecke eine (60) eine linken Laufrollen (17) zugeordnete Laufschienenstrecke und die andere (62) eine rechten Laufrollen (17) zugeordnete Laufschienenstrecke ist,
**dadurch gekennzeichnet,**
**dass** die erste Förderstrecke (54) und die zweite Förderstrecke (58) in der Umschleusungsstation (50) über eine diesen Förderstrecken gemeinsame, der ersten und der zweiten Laufschienenstrecke zugeordnete Entscheidungsstrecke oder einen diesen Förderstrecken gemeinsamen, der ersten und der zweiten Laufschienenstrecke zugeordneten Entscheidungsort verlaufen (Fig. 5),
**dass** in der Umschleusungsstation (50) im Bereich des Entscheidungsorts beziehungsweise innerhalb der Entscheidungsstrecke die Fördergutträger in tatsächlichem oder potentiellem Führungseingriff und gegebenenfalls Abstütz- und Laufrollen-Abrolleingriff sowohl mit der ersten Laufschienenstrecke (60) der ersten Förderstrecke (54) als auch mit der zweiten Laufschienenstrecke (62) der zweiten Förderstrecke (58) sind, dass die Fördergutträger beim Passieren der Entscheidungsstrecke beziehungsweise des Entscheidungsorts für die weitere Förderung wahlweise der ersten (54) oder der zweiten (58) Förderstrecke zugewiesen werden können, und
**dass** die erste Laufschienenstrecke (52) und die zweite Laufschienenstrecke (56) bogenförmig in Richtung zur Entscheidungsstrecke beziehungsweise zum Entscheidungsort aufeinander zu laufen und im Bereich der Entscheidungsstrecke beziehungsweise des Entscheidungsorts einen einen gemeinsamen Förderstrecken-Freiraum freilassenden Seitenabstand aufweisen.

2. Hängefördereinrichtung nach Anspruch 1, **dadurch gekennzeichnet, dass** in der Umschleusungsstation (50) im Bereich des Entscheidungsorts beziehungsweise innerhalb der Entscheidungsstrecke im Falle einer linken Laufrolle (17) zwischen dieser und der zugeordneten Laufschienenstrecke (60) kein wesentlicher oder nur ein gegenüber anderen Laufschienenstrecken reduzierter, seitlich nach rechts wirkender Führungseingriff vorgesehen ist und im Falle einer rechten Laufrolle (17) zwischen dieser und der zugeordneten Laufschienenstrecke (62) kein wesentlicher oder nur ein gegenüber anderen Laufschienenstrecken reduzierter, seitlich nach links wirkender Führungseingriff vorgesehen ist, vorzugsweise derart,
dass ein eine Führungsrille (19) zum Förderstreckenfreiraum hin seitlich begrenzender Schienenabschnitt (132) der ersten Laufschienenstrecke (52) und ein eine Führungsrille (19) zum Förderstrecken-Freiraum hin seitlich begrenzender Schienenabschnitt der zweiten Laufschienenstrecke jeweils im Bereich des Entscheidungsorts beziehungsweise innerhalb der Entscheidungsstrecke eine seitlich nach links und rechts offene Aussparung (130) aufweisen.

3. Hängefördereinrichtung nach einem der vorhergehenden Ansprüche, **dadurch gekennzeichnet, dass** eine Antriebsanordnung (90, 92, 94, 96) vorgesehen ist, die wenigstens ein der ersten Förderstrecke (54) zugeordnetes, die Fördergutträger (7) durch die Umschleusungsstation (50) förderndes langgestrecktes erstes Mitnahmeelement (92), gegebenenfalls erste Mitnahmekette (92), und wenigstens ein der zweiten Förderstrecke (58) zugeordnetes, die Fördergutträger (7) durch die Umschleusungsstation (50) förderndes langgestrecktes zweites Mitnahmeelement (96), gegebenenfalls zweite Mitnahmekette (96), aufweist.

4. Hängefördereinrichtung nach Anspruch 3, **dadurch gekennzeichnet, dass** die Fördergutträger (7) in der Umschleusungsstation (50) zumindest bereichsweise sowohl mit dem ersten Mitnahmeelement (92) als auch mit dem zweiten Mitnahmeelement (96) in Mitnahmeeingriff sind.

5. Hängefördereinrichtung nach Anspruch 3 oder 4, **dadurch gekennzeichnet, dass** eine der ersten und der zweiten Förderstrecke (54, 58) zugeordnete Haupt-Antriebsanordnung (80, 82) und eine der Umschleusungsstation zugeordnete Zusatz-Antriebsanordnung (90, 92, 94, 96) vorgesehen sind, wobei die Haupt-Antriebsanordnung (80, 82) wenigstens ein Fördergutträger (7) längs der ersten Förderstrecke (54) mitnehmendes langgestrecktes erstes Haupt-Mitnahmeelement (80), gegebenenfalls erstes Reibband (80), und wenigstens ein Fördergutträger längs der zweiten Förderstrecke (58) mitnehmendes langgestrecktes zweites Haupt-Mitnahmeelement, gegebenenfalls zweites Reibband, umfasst und wobei die Zusatz-Antriebsanordnung (90, 92, 94, 96) wenigstens ein der ersten Förderstrecke (54) zugeordnetes, die Fördergutträger (7) durch die Umschleusungsstation (50) förderndes langgestrecktes erstes Zusatz-Mitnahmeelement (92), gegebenenfalls erste Mitnahmekette (92), und wenigstens ein der zweiten Förderstrecke (58) zugeordnetes, die Fördergutträger (7) durch die Umschleusungsstation (50) förderndes langgestrecktes zweites Zusatz-Mitnahmeelement (96), gegebenenfalls zweite Mitnahmekette (96), aufweist.

6. Hängefördereinrichtung nach Anspruch 5, **dadurch gekennzeichnet, dass** die Zusatz-Mitnahmeelemente (92, 96) Eingriffsglieder (102) tragen, die vorzugsweise oberhalb der Laufrollen (17) an den Fördergutträgern (7) formschlüssig oder kraftschlüssig angreifen zur Herstellung eines form- oder kraftschlüssigen Mitnahmeeingriffs, wobei die Eingriffsglieder (102) vorzugsweise in Eingriffs-Aussparungen (28) der Fördergutträger (7) eingreifen unter Herstellung des Mitnahmeeingriffs, wobei im Falle des kraftschlüssigen Mitnahmeeingriffs dieser vorzugsweise auf elastischen Reaktionskräften der im Zuge der Herstellung des Mitnahmeeingriffs elastisch verformten Eingriffsglieder (102) beruht oder durch die elastischen Reaktionskräfte verstärkt wird.

7. Hängefördereinrichtung nach Anspruch 5 oder 6, **dadurch gekennzeichnet, dass** die Haupt-Mitnahmeelemente (80) an der Umschleusungsstation (50) vorbei geführt sind, dass in einem Eingangsbereich der Umschleusungsstation eine Übergabestation vorgesehen ist, in der der Mitnahme-Eingriff zwischen den Fördergutträgern (7) und dem jeweiligen Haupt-Mitnahmeelement (80) aufgehoben und der Mitnahme-Eingriff zwischen den Fördergutträgern (7) und dem jeweiligen Zusatz-Mitnahmeelement (92 beziehungsweise 96) hergestellt wird und dass in einem Ausgangsbereich der Umschleusungsstation eine weitere Übergabestation vorgesehen ist, in der der Mitnahme-Eingriff zwischen den Fördergutträgern (7) und dem jeweiligen Zusatz-Mitnahmeelement (92 beziehungsweise 96) aufgehoben und der Mitnahme-Eingriff zwischen den Fördergutträgern (7) und dem jeweiligen Haupt-Mitnahmeelement (80) hergestellt wird.

8. Umschleusungsstation für eine Hängefördereinrichtung nach einem der vorhergehenden Ansprüche, wobei die Umschleusungsstation (50) dafür ausgebildet ist, wahlweise Fördergutträger (7) von einer ersten Förderstrecke (54) auf eine zweite Förderstrecke (58) umzuschleusen oder auf der ersten Förderstrecke (54) zu belassen, sowie wahlweise Fördergutträger (7) von der zweiten Förderstrecke (58) auf die erste Förderstrecke (54) umzuschleusen oder auf der zweiten Förderstrecke (58) zu belassen, und wobei die Umschleusungsstation (50) eine der ersten Förderstrecke (54) zugehörige, durch die Umschleusungsstation (50) durchgehend hindurchführende erste Laufschienenstrecke (60) und eine der zweiten Förderstrecke (58) zugehörige, durch die Umschteusungsstation (50) durchgehend hindurchführende zweite Laufschienenstrecke (62) aufweist, wobei von der ersten und der zweiten Laufschienenstrecke eine (60) eine linken Laufrollen (17) zugeordnete Laufschienenstrecke und die andere (62) eine rechten Laufrollen (17) zugeordnete Laufschienenstrecke ist,
**dadurch gekennzeichnet,**
**dass** die erste Förderstrecke (54) und die zweite Förderstrecke (58) in der Umschleusungsstation (50) über eine diesen Förderstrecken gemeinsame, der ersten und der zweiten Laufschienenstrecke zugeordnete Entscheidungsstrecke oder einen diesen Förderstrecken gemeinsamen, der ersten und der zweiten Laufschienenstrecke zugeordneten Entscheidungsort verlaufen (Fig. 5),
**dass** in der Umschleusungsstation (50) im Bereich des Entscheidungsorts beziehungsweise innerhalb der Entscheidungsstrecke die Fördergutträger in tatsächlichem oder potentiellem Führungseingriff und gegebenenfalls Abstütz- und Laufrollen-Abrolleingriff sowohl mit der ersten Laufschienenstrecke (60) der ersten Förderstrecke (54) als auch mit der zweiten Laufschienenstrecke (62) der zweiten Förderstrecke (58) sind,
**dass** die Fördergutträger beim Passieren der Entscheidungsstrecke beziehungsweise des Entscheidungsorts für die weitere Förderung wahlweise der ersten (54) oder der zweiten (58) Förderstrecke zugewiesen werden können, und
**dass** die erste Laufschienenstrecke (52) und die zweite Laufschienenstrecke (56) bogenförmig in Richtung zur Entscheidungsstrecke beziehungsweise zum Entscheidungsort aufeinander zu laufen und im Bereich der Entscheidungsstrecke beziehungsweise des Entscheidungsorts einen einen gemeinsamen Förderstrecken-Freiraum freilassenden Seitenabstand aufweisen.

9. Verfahren zum Zusammenführen und gegebenenfalls Vermischen von wenigstens zwei Warenströmen unter Verwendung einer Hängefördereinrichtung nach einem der Ansprüche 1 bis 7, bei dem auf einer ersten Förderstrecke (54) ein erster Warenstrom und auf einer zweiten Förderstrecke (58) ein zweiter Warenstrom der Umschleusungsstation (50) zugeführt werden, die Warenströme in der Umschleusungsstation (50) zusammengeführt und gegebenenfalls vermischt werden und der resultierende Warenstrom auf der ersten (54) oder der zweiten (58) Förderstrecke von der Umschleusungsstation (50) abgeführt wird.

10. Verfahren zum Verteilen der Waren wenigstens eines Warenstroms auf wenigstens zwei resultierende Warenströme unter Verwendung einer Hängefördereinrichtung nach einem der Ansprüche 1 bis 7, bei dem auf wenigstens einer Förderstrecke (erste Förderstrecke (54) oder/und zweite Förderstrecke (58)) wenigstens ein Warenstrom der Umschleusungsstation (50) zugeführt wird und in der Umschleusungsstation die Waren wahlweise der ersten (54) oder der zweiten (58) Förderstrecke für die weitere Förderung zugewiesen und dementsprechend auf der ersten Förderstrecke (54) als erster resultierender Warenstrom und auf der zweiten Förderstrecke (58) als zweiter resultierender Warenstrom von der Umschleusungsstation (50) abgeführt werden.

## Claims

1. Suspended conveyer device for conveying supports (7) for goods to be conveyed along conveyer paths (54, 58), comprising a running rail arrangement (52, 56) with running rails (52, 56) which are associated with the conveyer paths and on which the supports (7) for goods to be conveyed can be guided,
whereby the supports (7) for goods to be conveyed in each case comprise a supporting element (15) having two running rollers (17), projecting from the supporting element on opposite sides, to roll on running rails (52, 56) associated with the conveyer paths (54, 58),
whereby in each case at least one running rail (52, 56) is assigned to the conveyer paths and has a running roller guide groove (19) which is open at the top to guide supports for goods to be conveyed which, in each case, as based on the conveying direction, are suspended by a left or right running roller (17) on the running rail, engage with this running roller in the guide groove, and, with the supporting element (15), extend downward into a conveyer path clearance laterally beside the running rail,
whereby a rerouting station (50) is provided, which is constructed to selectively reroute supports (7) for goods to be conveyed from a first conveyer path (54) to a second conveyer path (58) or to leave them on the first conveyer path (54), and to selectively reroute supports (7) for goods to be conveyed from the second conveyer path (58) to the first conveyer path (54) or to leave them on the second conveyer path (58), whereby rerouting between the first (54) and the second (58) conveyer path provides for a change from suspension of the supports (7) for goods to be conveyed by the left running rollers (17) on a relevant running rail to suspension of the supports (7) for goods to be conveyed by the right running rollers (17) on a relevant running rail or, respectively, a change from suspension of the supports (7) for goods to be conveyed by the right running rollers (17) on a relevant running rail to suspension of the supports (7) for goods to be conveyed by the left running rollers (17) on a relevant running rail,
whereby the first conveyer path (54) comprises a first running rail path (60) leading continuously through the rerouting station (50), and the second conveyer path (58) comprises a second running rail path (62) leading continuously through the rerouting station (50),
whereby, of the first and the second running rail path, one (60) is a running rail path associated with left running rollers (17) and the other (62) is a running rail path associated with right running rollers (17),
**characterized**
**in that** the first conveyer path (54) and the second conveyer path (58) in the rerouting station (50) run over a decision path which is common to these conveyer paths and is associated with the first and the second running rail path or a decision location which is common to these conveyer paths and is associated with the first and the second running rail path (Fig. 5),
**in that** in the rerouting station (50), in the area of the decision location or within the decision path, the supports for goods to be conveyed are in actual or potential guiding engagement and, possibly, supporting and running-roller rolling engagement both with a first running rail path (60) of the first conveyer path (54) and with a second running rail path (62) of the second conveyer path (58),
**in that**, as they pass the decision path or the decision location, the supports for goods to be conveyed can be selectively allocated to the first (54) or the second (58) conveyer path for the further conveyance, and
**in that** the first running rail path (52) and the second running rail path (56) run toward each other in a curved shape in the direction of the decision path or the decision location and, in the area of the decision path or the decision location, have a lateral spacing which leaves a common conveyer path clearance free.

2. Suspended conveyer device according to Claim 1, **characterized in that** in the rerouting station (50), in the area of the decision location or within the decision path, in the case of a left running roller (17), between the latter and the associated running rail path (60) there is provided no substantial guiding arrangement or only such engagement which is reduced as compared with other running rail paths, acting laterally to the right, and in the case of a right running roller (17), between the latter and the associated running rail path (62) there is provided no substantial guiding arrangement or only such engagement which is reduced as compared with other running rail paths, acting laterally to the left, preferably in such a way that a rail section (132) which bounds a guide groove (19) laterally towards the conveyer path clearance and belongs to the first running rail path (52), and a rail section which bounds a guide groove (19) laterally towards the conveyer path clearance and belongs to the second running rail path in each case have a cutout (130) which is open laterally to the left and right, respectively in the area of the decision location or within the decision path.

3. Suspended conveyer device according to one of the preceding claims, **characterized in that** a drive arrangement (90, 92, 94, 96) is provided which comprises at least one elongate first driver element (92), if appropriate a first driver chain (92), which is associated with the first conveyer path (54) and conveys the supports (7) for goods to be conveyed through the rerouting station (50), and at least one elongate second driver element (96), if appropriate a second driver chain (96), which is associated with the second conveyer path (58) and conveys the supports (7) for goods to be conveyed through the rerouting station (50).

4. Suspended conveyer device according to Claim 3, **characterized in that** in the rerouting station (50), the supports (7) for goods to be conveyed are, at least in some areas, in driving engagement both with the first driver element (92) and with the second driver element (96).

5. Suspended conveyer device according to Claim 3 or 4, **characterized in that** a main drive arrangement (80, 82) assigned to the first and the second conveyer path (54, 58), and an additional drive arrangement (90, 92, 94, 96) assigned to the rerouting station are provided, the main drive arrangement (80, 82) comprising at least one elongate first main driver element (80), if appropriate a first frictional belt (80), that drives supports (7) for goods to be conveyed along the first conveyer path (54), and at least one elongate second main driver element, if appropriate a second frictional belt, which drives supports for goods to be conveyed along the second conveyer path (58), and the additional drive arrangement (90, 92, 94, 96) comprising at least one elongate first additional driver element (92), if appropriate a first driver chain (92), which is assigned to the first conveyer path (54) and conveys the supports (7) for goods to be conveyed through the rerouting station (50), and at least one elongate second additional driver element (96), if appropriate a second driver chain (96), which is assigned to the second conveyer path (58) and conveys the supports (7) for goods to be conveyed through the rerouting station (50).

6. Suspended conveyer device according to Claim 5, **characterized in that** the additional driver elements (92, 96) carry engagement elements (102) which, preferably above the running rollers (17), act with a form fit or force fit on the supports (7) for goods to be conveyed in order to produce a form-fitting or force-fitting driving engagement, the engagement elements (102) preferably engaging in engagement cutouts (28) in the supports (7) for goods to be conveyed, producing the driving engagement, wherein, in the case of the force-fitting driving engagement, the latter is preferably based on resilient reaction forces of the engagement elements (102) deformed resiliently in the course of the production of the driving engagement, or is reinforced by the resilient reaction forces.

7. Suspended conveyer device according to one of claims 5 to 6, **characterized in that** the main driver elements (80) are guided past the rerouting station (50), **in that**, in an inlet area of the rerouting station, a transfer station is provided, in which the driving engagement between the supports (7) for goods to be conveyed and the respective main driver element (80) is canceled and the driving engagement between the supports (7) for goods to be conveyed and the respective additional driver element (92 or 96) is produced and **in that**, in an outlet area of the rerouting station, a further transfer station is provided, in which the driving engagement between the supports (7) for goods to be conveyed and the respective additional driver element (92 or 96) is cancelled and the driving engagement between the supports (7) for goods to be conveyed and the respective main driver element (80) is produced.

8. Rerouting station for a suspended conveyer device according to one of the preceding claims, the rerouting station (50) being designed to selectively reroute supports (7) for goods to be conveyed from a first conveyer path (54) to a second conveyer path (58) or leave them on the first conveyer path (54), and to selectively reroute supports (7) for goods to be conveyed from the second conveyer path (58) to the first conveyer path (54) or to leave them on the second conveyer path (58), and the rerouting station (50) comprising a first running rail path (60) associated with the first conveyer path (54) and running continuously through the rerouting station (50), and a second running rail path (62) that is associated with the second conveyer path (58) and runs continuously through the rerouting station (50), whereby, of the first and the second running rail path, one (60) is a running rail path associated with left running rollers (17) and the other (62) is a running rail path associated with right running rollers (17), **characterized in that** the first conveyer path (54) and the second conveyer path (58) in the rerouting station (50) run over a decision path which is common to these conveyer paths and is associated with the first and the second running rail path or a decision location which is common to these conveyer paths and is associated with the first and the second running rail path (Fig. 5),
**in that** in the rerouting station (50), in the area of the decision location or within the decision path, the supports for goods to be conveyed are in actual or potential guiding engagement and, if appropriate, supporting and running-roller rolling engagement both with a first running rail path (60) of the first conveyer path (54) and with a second running rail path (62) of the second conveyer path (58),
**in that** as they pass the decision path or the decision location, the supports for goods to be conveyed can be selectively allocated to the first (54) or the second (58) conveyer path for further conveyance, and
**in that** the first running rail path (52) and the second running rail path (56) run toward each other in a curved shape in the direction of the decision path or the decision location and, in the area of the decision path or the decision location, have a lateral spacing which leaves a common conveyer path clearance free.

9. Method of combining and, if appropriate, mixing at least two streams of goods by using a suspended conveyer device according to one of Claims 1 to 7, in which a first stream of goods is supplied to the rerouting station (50) on a first conveyer path (54), and a second stream of goods is supplied to the rerouting station (50) on a second conveyer path (58), the streams of goods are combined, and, if appropriate, mixed in the rerouting station (50), and the resultant stream of goods is carried away from the rerouting station (50) on the first (54) or the second (58) conveyer path.

10. Method of distributing the goods from at least one stream of goods to at least two resultant streams of goods, using a suspended conveyer device according to one of Claims 1 to 7, in which, on at least one conveyer path (first conveyer path (54) and/or second conveyer path (58)), at least one stream of goods is supplied to the rerouting station (50) and, in the rerouting station, the goods are selectively allocated to the first (54) or the second (58) conveyer path for further conveyance and, accordingly, are carried away from the rerouting station (50) on the first conveyer path (54) as a first resultant stream of goods and on the second conveyer path (58) as a second resultant stream of goods.

## Revendications

1. Dispositif de convoyage suspendu pour transporter des supports de marchandises de convoyage (7) le long de voies de convoyage (54, 58), comprenant un ensemble de rails de roulement (52, 56) avec des rails de roulement (52, 56) associés aux voies de convoyage, rails sur lesquels les supports de marchandises de convoyage (7) peuvent circuler,
dans lequel les supports de marchandises de convoyage (7) présentent chacun un corps support (15) avec deux rouleaux de roulement (17) formant saillie du corps support sur des côtés opposés et destinés à rouler sur les rails de roulement (52, 56) associés aux voies de convoyage (54, 58),
dans lequel il est associé à chaque fois aux voies de convoyage un rail de roulement (52, 56) qui présente une rainure de guidage de rouleaux de roulement (19) ouverte vers le haut pour guider des supports de marchandises de convoyage qui sont suspendus au rail de roulement avec un rouleau de roulement (17) de gauche ou de droite par rapport à la direction de convoyage, sont en prise dans la rainure de guidage avec ce rouleau de roulement et s'étendent avec le corps support (15) vers le bas dans un espace libre de voie de transport à côté latéralement du rail de transport,
dans lequel un poste de changement de voie (50) est prévu, qui est conformé pour, au choix, envoyer des supports de marchandises de convoyage (7) d'une première voie de convoyage (54) à une deuxième voie de convoyage (58) ou les laisser sur la première voie de convoyage (54), ainsi que pour, au choix, envoyer des supports de marchandises de convoyage (7) de la deuxième voie de convoyage (58) à la première voie de convoyage (54) ou les laisser sur la deuxième voie de convoyage (58), le changement de voie entre la première (54) et la deuxième (58) voies de convoyage prévoyant un changement d'une suspension des supports de marchandises de convoyage (7) avec le rouleau de roulement (17) de gauche sur un rail de roulement concerné à une suspension des supports de marchandises de convoyage (7) avec le rouleau de roulement (17) de droite sur un rail de roulement concerné, respectivement un changement d'une suspension des supports de marchandises de convoyage (7) avec le rouleau de roulement (17) de droite sur un rail de roulement concerné à une suspension des supports de marchandises de convoyage (7) avec le rouleau de roulement (17) de gauche sur un rail de roulement concerné,
dans lequel la première voie de convoyage (54) présente une première section de rail de roulement (60) traversant de manière continue le poste de changement de voie (50) et la deuxième voie de convoyage (58) présente une deuxième section de rail de roulement (62) traversant de manière continue le poste de changement de voie (50), l'une (60) des première et deuxième sections de rail de roulement étant une section de rail de roulement associée aux rouleaux de roulement (17) de gauche et l'autre (62) étant une section de rail de roulement associée aux rouleaux de roulement (17) de droite,
**caractérisé en ce que** la première voie de convoyage (54) et la deuxième voie de convoyage (58) s'étendent dans le poste de changement de voie (50) sur une section de décision commune à ces voies de convoyage et associée à la première et à la deuxième section de rail de roulement, ou un lieu de décision commun à ces voies de convoyage et associé à la première et à la deuxième section de rail de roulement (fig. 5),
**en ce qu'**au poste de changement de voie (50), au niveau du lieu de décision ou sur la voie de décision, les supports de marchandises de convoyage sont en prise de guidage réelle ou potentielle et éventuellement en prise d'appui et de roulement sur les rouleaux de roulement à la fois avec la première section de rail de roulement (60) de la première voie de convoyage (54) et avec la deuxième section de rail de roulement (62) de la deuxième voie de convoyage (58),
**en ce qu'**au passage de la section de décision ou du lieu de décision, les supports de marchandises de convoyage peuvent être affectés pour la poursuite du convoyage au choix à la première (54) ou à la deuxième (58) voie de convoyage, et
**en ce que** la première section de rail de transport (52) et la deuxième section de rail de transport (56) convergent en courbe dans la direction de la section de décision ou du lieu de décision, et présentent au niveau de la section de décision ou du lieu de décision une distance latérale commune laissant libre l'espace libre des voies de transport.

2. Dispositif de convoyage suspendu selon la revendication 1, **caractérisé en ce qu'**au poste de changement de voie (50) au niveau du lieu de décision ou sur la section de décision, dans le cas d'un rouleau de roulement (17) de gauche, il n'est prévu entre celui-ci et la section de rail de roulement (60) associée aucune prise de guidage importante agissant vers la droite, ou seulement une prise réduite par rapport à d'autres sections de rail de roulement et, dans le cas d'un rouleau de roulement (17) de droite, il n'est prévu entre celui-ci et la section de rail de roulement (60) associée aucune prise de guidage importante agissant vers la gauche, ou seulement une prise réduite par rapport à d'autres sections de rail de roulement, de préférence de telle manière qu'une section de rail (132) de la première section de rail de roulement (52) délimitant latéralement une rainure de guidage (19) en direction de l'espace libre des voies de convoyage et une section de rail de la deuxième section de rail de roulement délimitant latéralement une rainure de guidage (19) en direction de l'espace libre des voies de convoyage présentent chacune un évidement (130) ouvert latéralement vers la gauche et la droite au niveau du lieu de décision ou sur la section de décision.

3. Dispositif de convoyage suspendu selon l'une des revendications précédentes, **caractérisé en ce qu'**un système d'entraînement (90, 92, 94, 96) est prévu, qui présente au moins un premier élément d'entraînement orienté longitudinalement (92), le cas échéant une première chaîne d'entraînement (92), associé à la première voie de convoyage (54) et transportant les supports de marchandises de convoyage (7) à travers le poste de changement de voie, et au moins un deuxième élément d'entraînement oblong orienté longitudinalement (96), le cas échéant une deuxième chaîne d'entraînement (96), associé à la deuxième voie de convoyage (58) et transportant les supports de marchandises de convoyage (7) à travers le poste de changement de voie (50).

4. Dispositif de convoyage suspendu selon la revendication 3, **caractérisé en ce que** les supports de marchandises de convoyage (7) sont en prise d'entraînement au poste de changement de voie (50) au moins par zone à la fois avec le premier élément d'entraînement (92) et avec le deuxième élément d'entraînement (96).

5. Dispositif de convoyage suspendu selon la revendication 3 ou 4, **caractérisé en ce qu'**un système d'entraînement principal (80, 82) associé aux première et deuxième voies de convoyage (54, 58) et un système d'entraînement additionnel (90, 92, 94, 96) associé au poste de changement de voie sont prévus, le système d'entraînement principal (80, 82) comprenant au moins un premier élément d'entraînement principal (80) orienté longitudinalement, le cas échéant un premier tapis à friction (80), entraînant des supports de marchandises de convoyage (7) le long de la première voie de convoyage (54), et au moins un deuxième élément d'entraînement principal orienté longitudinalement, le cas échéant un deuxième tapis à friction, entraînant des supports de marchandises de convoyage (7) le long de la deuxième voie de convoyage (58), et le système d'entraînement additionnel (90, 92, 94, 96) présentant au moins un premier élément d'entraînement additionnel (92) orienté longitudinalement, le cas échéant une première chaîne d'entraînement (92), associé à la première voie de convoyage et transportant les supports de marchandises de convoyage à travers le poste de changement de voie (60), et au moins un deuxième élément d'entraînement additionnel (96) orienté longitudinalement, le cas échéant une deuxième chaîne d'entraînement (96), associé à la deuxième voie de convoyage (58) et transportant les supports de marchandises de convoyage (7) à travers le poste de changement de voie (50).

6. Dispositif de convoyage suspendu selon la revendication 5, **caractérisé en ce que** les éléments d'entraînement additionnels (92, 96) portent des organes de prise (102), qui se mettent en prise par engagement positif ou par adhérence de préférence au-dessus des rouleaux de roulement (17) sur les supports de marchandises de convoyage (7) afin d'établir une prise d'entraînement par engagement positif ou par adhérence, les organes de prise (102) s'engageant de préférence dans des évidements de prise (28) des supports de marchandises de convoyage (7) en établissant une prise d'entraînement, la prise, dans le cas d'une prise d'entraînement par adhérence, reposant de préférence sur des forces de réaction élastiques des organes de prise (102) déformés élastiquement au cours de l'établissement de la prise d'entraînement, ou étant renforcée par les forces de réaction élastiques.

7. Dispositif de convoyage suspendu selon la revendication 5 ou 6, **caractérisé en ce que** les éléments d'entraînement principaux (80) passent devant le poste de changement de voie (50), **en ce que** dans une zone d'entrée du poste de changement de voie est prévue une zone de transfert
dans laquelle la prise d'entraînement entre les supports de marchandises de convoyage (7) et l'élément d'entraînement principal (80) correspondant est supprimée et la prise d'entraînement entre les supports de marchandises de convoyage (7) et l'élément d'entraînement supplémentaire (92, resp. 96) respectif est établie, et **en ce que**, dans une zone de sortie du poste de changement de voie, un autre poste de transfert est prévu, dans lequel la prise d'entraînement entre les supports de marchandises de convoyage (7) et l'élément d'entraînement supplémentaire (92, resp. 96) concerné est supprimée et la prise d'entraînement entre les supports de marchandises de convoyage (7) et l'élément d'entraînement principal (80) concerné est établie.

8. Poste de changement de voie pour un dispositif de convoyage suspendu selon l'une des revendications précédentes, dans lequel le poste de changement de voie (50) est conformé pour, au choix, envoyer des supports de marchandises de convoyage (7) d'une première voie de convoyage (54) à une deuxième voie de convoyage (58) ou les laisser sur la première voie de convoyage (54), ainsi que pour, au choix, envoyer des supports de marchandises de convoyage (7) de la deuxième voie de convoyage (58) à la première voie de convoyage (54) ou les laisser sur la deuxième voie de convoyage (58), et dans lequel le poste de changement de voie (58) présente une première section de rail de roulement (60) associée à la première voie de convoyage (54) et traversant de manière continue le poste de changement de voie (50) et une deuxième section de rail de roulement (62) associée à la deuxième voie de convoyage (58) et traversant de manière continue le poste de changement de voie (50), l'une (60) des première et deuxième sections de rail de roulement étant une section de rail de roulement associée aux rouleaux de roulement (17) de gauche et l'autre (62) étant une section de rail de roulement associée aux rouleaux de roulement (17) de droite,
**caractérisé en ce que** la première voie de convoyage (54) et la deuxième voie de convoyage (58) s'étendent dans le poste de changement de voie (50) sur une section de décision commune à ces voies de convoyage et associée à la première et à la deuxième section de rail de roulement ou un lieu de décision commun à ces voies de convoyage et associé à la première et à la deuxième section de rail de roulement (fig. 5),
**en ce qu'**au poste de changement de voie (50), au niveau du lieu de décision ou sur la voie de décision, les supports de marchandises de convoyage sont en prise de guidage réelle ou potentielle et éventuellement en prise d'appui et de roulement sur les rouleaux de roulement à la fois avec la première section de rail de roulement (60) de la première voie de convoyage (54) et avec la deuxième section de rail de roulement (62) de la deuxième voie de convoyage (58),
**en ce qu'**au passage de la section de décision ou du lieu de décision, les supports de marchandises de convoyage peuvent être affectés pour la poursuite du convoyage au choix à la première (54) ou à la deuxième (58) voie de convoyage, et
**en ce que** la première section de rail de transport (52) et la deuxième section de rail de transport (56) convergent en courbe dans la direction de la section de décision ou du lieu de décision, et présentent au niveau de la section de décision ou du lieu de décision une distance latérale commune laissant libre l'espace libre des voies de transport.

9. Procédé pour regrouper et éventuellement mélanger au moins deux flux de marchandises à l'aide d'un dispositif de convoyage suspendu selon l'une des revendications 1 à 7, dans lequel un premier flux de marchandises sur une première voie de convoyage (54) et un deuxième flux de marchandises sur une deuxième voie de convoyage (58) sont apportés au poste de changement de voie (50), les flux de marchandises sont regroupés et éventuellement mélangés au poste de changement de voie (50) et le flux de marchandises obtenu est évacué du poste de changement de voie (50) sur la première (54) ou la deuxième (58) voie de convoyage.

10. Procédé pour répartir les marchandises d'au moins un flux de marchandises en au moins deux flux de marchandises résultants à l'aide d'un dispositif de convoyage suspendu selon l'une des revendications 1 à 7, dans lequel un flux de marchandises est apporté au poste de changement de voie (50) sur au moins une voie de convoyage (première voie de convoyage (54) et/ou deuxième voie de convoyage (58)) et, au poste de changement de voie, les marchandises sont attribuées au choix à la première (54) ou à la deuxième (58) voie de convoyage pour la suite du convoyage et sont évacuées de manière correspondante du poste de changement de voie (50) sur la première voie de convoyage (54) en tant que premier flux de marchandises résultant et sur la deuxième voie de convoyage (58) en tant que deuxième flux de marchandises résultant.
